(19) Europäisches Patentamt
European Patent Office
Office européen des brevets

(11) **EP 2 200 330 A1**

(12) **EUROPEAN PATENT APPLICATION**
published in accordance with Art. 153(4) EPC

(43) Date of publication:
**23.06.2010 Bulletin 2010/25**

(51) Int Cl.:
***H04N 11/04*** (2006.01)    ***H04N 7/32*** (2006.01)

(21) Application number: **08839485.3**

(22) Date of filing: **01.10.2008**

(86) International application number:
**PCT/JP2008/067822**

(87) International publication number:
**WO 2009/051010 (23.04.2009 Gazette 2009/17)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **15.10.2007   JP 2007267893**

(71) Applicant: **Mitsubishi Electric Corporation
Tokyo 100-8310 (JP)**

(72) Inventors:
 • **SEKIGUCHI, Shunichi
 Tokyo 100-8310 (JP)**
 • **YAMAGISHI, Shuuichi
 Tokyo 100-8310 (JP)**
 • **MORIYA, Yoshimi
 Tokyo 100-8310 (JP)**
 • **YAMADA, Yoshihisa
 Tokyo 100-8310 (JP)**
 • **ASAI, Kohtaro
 Tokyo 100-8310 (JP)**
 • **MURAKAMI, Tokumichi
 Tokyo 100-8310 (JP)**
 • **IDEHARA, Yuichi
 Tokyo 100-8310 (JP)**

(74) Representative: **Pfenning, Meinig & Partner GbR
Patent- und Rechtsanwälte
Theresienhöhe 13
80339 München (DE)**

(54) **IMAGE CODING DEVICE, IMAGE DECODING DEVICE, IMAGE CODING METHOD, AND IMAGE DECODING METHOD**

(57)    Provided is a method and the like for efficiently compressing information by removing signal correlations more effectively according to local characteristics of a 4:4:4 format video signal to be coded. An image coding device includes: a signal analysis unit for obtaining, for a signal of each of the plurality of color components belonging to the first region, an average in a unit of a second region obtained by dividing the first region, and obtaining an average separated signal corresponding to the second region; an average signal coding unit for applying, independently for the each of the plurality of color components, prediction coding to an average signal formed of the average obtained in the unit of the second region obtained by dividing the first region; and an average separated signal coding unit for transforming the average separated signals of the plurality of color components, which are obtained in the unit of the second region obtained by dividing the first region, by switching among a plurality of inter-color-component transform methods provided, and coding the transformed average separated signals independently of the average signal coding unit, in which the average separated signal coding unit outputs information indicating selected inter-color-component transform methods to the bit stream as a part of coded data.

Fig. 1

**Description**

Technical Field

The present invention relates to an image signal coding device, an image signal decoding device, an image signal coding method, and an image signal decoding method which are used for a technology of image compression coding, a technology of transmitting compressed image data, and the like.

Background Art

International standard video coding methods such as MPEG and ITU-T H.26x mainly use a standardized input signal format referred to as a 4:2:0 format for a signal to be subjected to the compression processing. The 4:2:0 format is a format obtained by transforming a color motion image signal such as an RGB signal into a luminance component (Y) and two color difference components (Cb, Cr), and reducing the number of samples of the color difference components to a half of the number of samples of the luminance component both in the horizontal and vertical directions. The color difference components are low in visibility compared to the luminance component, and hence the international standard video coding methods such as MPEG-4 AVC/H.264 (hereinbelow, referred to as AVC) (see Non-patent Document 1) are based on the premise that, by applying down-sampling to the color difference components before the coding, original information content to be coded is reduced. On the other hand, for contents such as digital cinema, in order to precisely reproduce, upon viewing, the color representation defined upon the production of the contents, a direct coding method in a 4:4:4 format which, for coding the color difference components, employs the same number of samples as that of the luminance component without the down-sampling is recommended. As a method suitable for this purpose, there are standard methods described in Non-patent Document 2 and Non-patent Document 3. FIG. 31 illustrates a difference between the 4:2:0 format and the 4:4:4 format. In this figure, the 4:2:0 format includes the luminance (Y) signal and the color difference (Cb, Cr) signals, and one sample of the color difference signal corresponds to 2x2 samples of the luminance signal while the 4:4:4 format does not specifically limit the color space for expressing the colors to Y, Cb, and Cr, and the sample ratio of the respective color component signals is 1:1.

Non-patent Document 1: MPEG-4 AVC(ISO/IEC 14496-10)/ITU-T H.264 standard
Non-patent Document 2: JPEG2000(ISO/IEC 15444) standard
Non-patent Document 3: MPEG-4 AVC(ISO/IEC 14496-10)/ITU-T H.264 Amendment2

Disclosure of the Invention

Problem to be solved by the Invention

For example, the coding in the 4:4:4 format described in Non-patent Document 3, as illustrated in FIG. 32, first, input video signals 1001 (in the 4:4:4 format) to be coded are, in advance, transformed into signals in an appropriate color space (such as YCbCr space) directly or through a color space transformation unit 1002, and are input, as video signals to be coded 1003, to a prediction unit 1004 while a macroblock (rectangular block of 16 pixels by 16 lines) is set as a unit. The prediction unit 1004 predicts image signals of the respective color components in the macroblock within a frame and between frames, thereby obtaining prediction error signals 1005. The compression unit 1006 applies transform processing such as the discrete cosine transform (DCT) to the prediction error signals 1005 to remove signal correlations, and quantizes resulting signals into compressed data 1007. The compressed data 1007 is coded through the entropy coding by a variable-length coding unit 1008, is output as a bit stream 1009, and is also sent to a local decoding unit 1010, and decoded prediction error signals 1011 are obtained. These signals are respectively added to predicted signals 1012 used for generating the prediction error signals 1005, thereby obtaining decoded signals 1013. The decoded signals 1013 are stored in a memory 1014 in order to generate the predicted signals 1012 for the subsequent video signals to be coded 1003. It should be noted that parameters for predicted signal generation 1015 determined by the prediction unit 1004 in order to obtain the predicted signals 1012 are sent to the variable-length coding unit 1008, and are output as the bit stream 1009. On this occasion, the parameters for predicted signal generation 1015 contain, for example, an intra prediction mode indicating how the spatial prediction is carried out in a frame, and motion vectors indicating the quantity of motion between frames.

A video signal in the 4:4:4 format contains the same number of samples for the respective color components, and thus contains redundant information contents compared with a video signal in the conventional 4:2:0 format. In order to increase the compression efficiency of the video signal in the 4:4:4 format, it is necessary to further reduce the redundancy between color components compared to the fixed color space definition (Y, Cb, Cr) in the conventional 4:2:0 format. In Non-patent Document 3, the video signals to be coded 1003 are obtained by uniformly transforming the entire image through a specific color space transform processing independently of local characteristics of the signals, and signal processing that considers the removal of the correlation between the color components is not carried out in any of the prediction unit 1004, the compression unit 1006, and the variable-length coding unit 1008. For this reason, it is not considered that the signal correlation is maximally removed between the color components in the same pixel position.

It is therefore an object of the present invention to provide a method of efficiently compress information by removing signal correlations according to local characteristics of a video signal in a 4:4:4 format which is to be coded, and, as described as the conventional technology, for coding a motion video signal, such as a signal in a 4:4:4 format, which does not have a difference in sample ratio among color components, to provide an image coding device, an image decoding device, an image coding method, and an image decoding method, which are enhanced in optimality.

Means for solving the Problem

According to the present invention, there is provided an image coding device for receiving, as an input, a color image formed of a plurality of color components, performing compression coding in a unit of a first region obtained by dividing the color image, and generating a bit stream. The image coding device includes a signal analysis unit for obtaining, for a signal of each of the plurality of color components belonging to the first region, an average in a unit of a second region obtained by dividing the first region, and obtaining an average separated signal corresponding to the second region; an average signal coding unit for applying, independently for the each of the plurality of color components, prediction coding to an average signal formed of the average obtained in the unit of the second region obtained by dividing the first region; and an average separated signal coding unit for transforming the average separated signals of the plurality of color components, which are obtained in the unit of the second region obtained by dividing the first region, by switching among a plurality of inter-color-component transform methods provided, and coding the transformed average separated signals independently of the average signal coding unit, in which the average separated signal coding unit outputs information indicating selected inter-color-component transform methods to the bit stream as a part of coded data.

Effects of the Invention

According to the image coding device, the image decoding device, the image coding method, and the image decoding method of the present invention, for coding which uses various color spaces without limitation to a fixed color space such as the YCbCr color space, there can be provided a configuration in which local signal correlations present between respective color components are adaptively removed, and even when there are various definitions of the color space, optimal coding processing can be carried out.

Brief Description of the Drawings

[FIG 1] An explanatory diagram illustrating a configuration of an image coding device according to a first embodiment.

[FIG. 2] An explanatory diagram illustrating an internal configuration of a signal analysis unit 103.

[FIG. 3] An explanatory diagram illustrating an example of processing when N=4.

[FIG. 4] An explanatory diagram illustrating an internal configuration of a first signal coding unit 106.

[FIG. 5] An explanatory diagram illustrating an internal configuration of a second signal coding unit 107.

[FIGS. 6] Explanatory diagrams illustrating a structure of a bit stream 111 according to the first embodiment.

[FIG. 7] An explanatory diagram illustrating a configuration of an image decoding device according to the first embodiment.

[FIG. 8] An explanatory diagram illustrating an internal configuration of a signal composition unit 205.

[FIG. 9] An explanatory diagram illustrating an example of processing when N=4.

[FIG. 10] An explanatory diagram illustrating an internal configuration of a first signal decoding unit 201.

[FIG. 11] An explanatory diagram illustrating an internal configuration of a second signal decoding unit 202.

[FIG. 12] An explanatory diagram illustrating a configuration of another image coding device according to the first embodiment.

[FIG. 13] An explanatory diagram illustrating a configuration of an image coding device according to a second embodiment.

[FIG. 14] An explanatory diagram illustrating an internal configuration of a C0 component coding unit 300.

[FIG. 15] An explanatory diagram illustrating an internal configuration of an AC signal generation unit 308.

[FIG. 16] An explanatory diagram illustrating an internal configuration of a C1 component coding unit 310.

[FIG. 17] An explanatory diagram illustrating an internal configuration of a DC prediction unit 311.

[FIG. 18] An explanatory diagram illustrating a configuration of an image decoding device according to the second embodiment.

[FIGS. 19] Explanatory diagrams illustrating a structure of a bit stream 111 according to the second embodiment.

[FIG. 20] An explanatory diagram illustrating an internal configuration of a C0 component decoding unit 401.

[FIG. 21] An explanatory diagram illustrating an internal configuration of a C1 component decoding unit 402.

[FIG. 22] An explanatory diagram illustrating a configuration of an image coding device according to a third embodiment.

[FIG. 23] An explanatory diagram illustrating an internal configuration of a prediction unit 500.

[FIG. 24] An explanatory diagram illustrating an internal configuration of a prediction mode determination unit 522.

[FIGS. 25] Explanatory diagrams illustrating a structure of a bit stream 111 according to the third embodiment.

[FIG. 26] An explanatory diagram illustrating a configuration of an image decoding device according to the third embodiment.

[FIG 27] An explanatory diagram illustrating an internal configuration of a prediction unit 601.

[FIG. 28] An explanatory diagram illustrating sampling density patterns.

[FIG. 29] An explanatory diagram illustrating sampling density patterns.

[FIG. 30] An explanatory diagram illustrating sampling density patterns.

[FIG. 31] An explanatory diagram illustrating a difference between a 4:2:0 format and a 4:4:4 format.

[FIG. 32] An explanatory diagram illustrating conventional coding for the 4:4:4 format.

Best Modes for carrying out the Invention

First Embodiment

In a first embodiment, a description is given of a coding device for coding a video frame input in a 4:4:4 format in a unit of a rectangular region of $M \times M$ pixels for respective color components by using intra-frame and inter-frame adaptive predictions, and a corresponding decoding device.

1. Overview of Operation of Coding Device

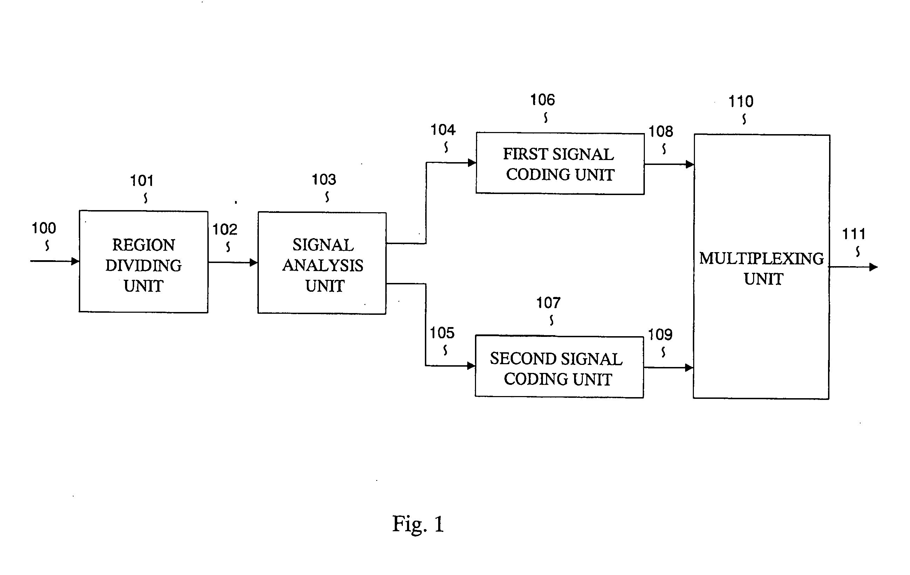

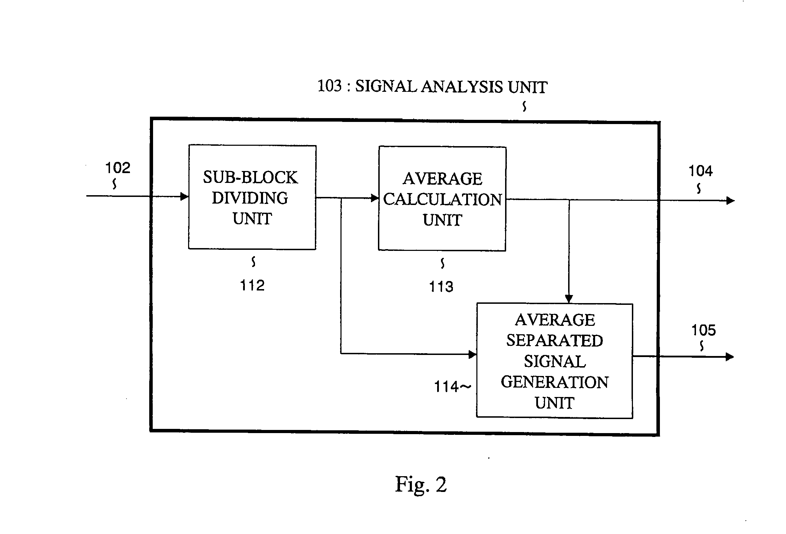

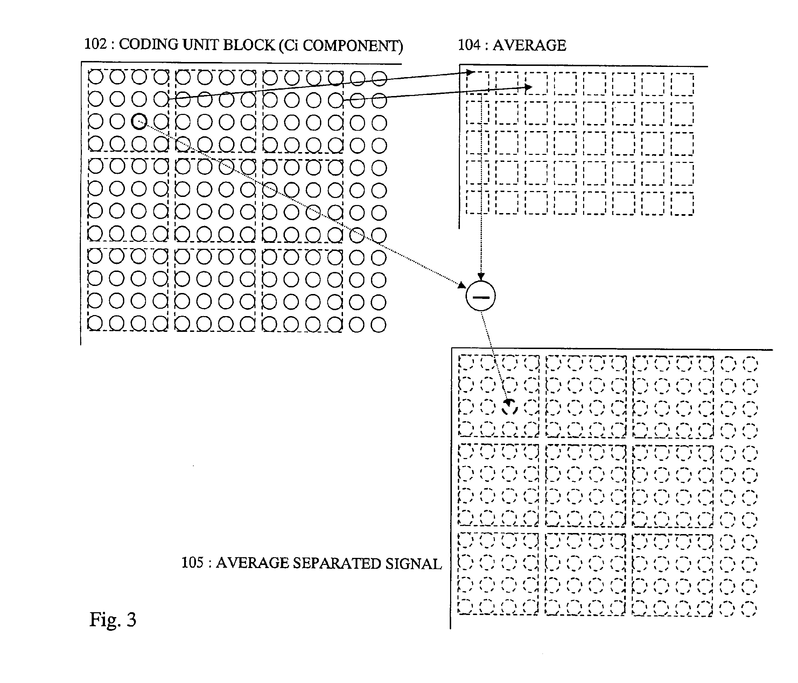

FIG. 1 illustrates a configuration of an image coding device according to a first embodiment. Input signals 100 in the 4:4:4 format are each formed of signals of three color components C0, C1, and C2, are divided by a region dividing unit 101 into coding unit blocks 102 each formed of a rectangular block of a $M \times M$ pixel size for the C0, C1, and C2 components, and are sequentially input to a signal analysis unit 103. FIG. 2 illustrates an internal configuration of the signal analysis unit 103. In the signal analysis unit 103, first, a sub-block dividing unit 112 divides the coding unit block 102 into $N \times N$ pixel blocks (N<M) respectively for the C0, C1, and C2 components, and an average calculation unit 113 obtains averages 104 of the $N \times N$ pixel blocks. Then, an average separated signal generation unit 114 obtains average separated signals 105 ($N \times N$ pixel block) by separating the average 104 from each pixel in the $N \times N$ pixel block. FIG. 3 illustrates an example of the processing when N=4. The average 104 is calculated as the average of a 4x4 pixel block enclosed by dotted lines in the coding unit block 102. For example, when M=16, image data formed of the averages 104 is formed of pixels having the number thereof 1/16 of the number of pixels of the coding unit block. The average separated signal 105 is obtained by subtracting, from each pixel in the 4x4 pixel block enclosed by the dotted lines in the coding unit block 102, the corresponding average 104. An $(M/N) \times (M/N)$ pixel block formed of the averages 104 is coded through a compression coding by a first signal coding unit 106, and is sent, as a bit stream 108, to a multiplexing unit 110. An $M \times M$ pixel block formed of the average separated signal 105 is coded through compression coding by a second signal coding unit 107, and is sent, as a bit stream 109, to the multiplexing unit 110. The multiplexing unit 110 merges the bit streams 108 and 109, and outputs a bit stream 111.

By configuring the coding device as described above, the following effects are provided. In a high-definition video such as the HDTV (1,920 pixels by 1,080 lines), with respect to a group of pixels of a fixed number (object area such as a person in a video, for example) constructing a content in an image, an area occupied by one pixel is extremely small. In other words, when the $N \times N$ pixel block is sufficiently smaller than the video frame size, a signal significant as an image pattern in the $N \times N$ pixel block can be summarized to the average thereof (DC component). On the other hand, an average separated signal (AC component) which is obtained by separating the average from the $N \times N$ pixel block forms components such as an edge representing a direction of an image pattern in the $N \times N$ pixel block. However, when the $N \times N$ pixel block is sufficiently small with respect to the video frame size, information representing a pattern structure of the image is no longer contained in the $N \times N$ pixel block, and rather the average separated signal contains the noise component at a higher ratio. The information corresponding to the noise component causes degradation of the prediction efficiency of the motion compensation prediction and the spatial pixel compensation which employ similarity of pattern structures in an image as a unit of measurement. A DC image, which is a collection of the averages (DC components) of the $N \times N$ pixel blocks corresponding to the $M \times M$ pixel block, is removed of the noise components by smoothing in the average calculation process, and therefore forms a signal better representing the image patterns. In other words, the DC image serves as a more appropriate signal as a signal for the motion compensation prediction and the spatial pixel prediction. On the other hand, the AC image as the average separated signal, when the area of the $N \times N$ pixel block is sufficiently small with respect to the video frame size, becomes less suitable for the spatial and temporal prediction based on the similarity of pattern structures in the image. Thus, in the coding device according to the first embodiment, the DC image is coded using the predictions between frames and within a frame described as the conventional technology, and the AC image is transformed into a signal in which power is maximally concentrated on a pixel of a specific color component at the same pixel position, and is then coded without the predictions between frames and within a frame. This configuration enables efficient coding of a high-definition video signal in the 4:4:4 format such as the HDTV (1,920 pixels by 1,080 lines). As another effect, by limiting the prediction processing between frames and within a frame to the DC image, the number of pixels to be subjected to the prediction processing is reduced to $1/\{(M/N)\times(M/N)\}$, and this configuration provides an effect of reducing arithmetic operations required for the prediction processing, and reducing the amount of reference data used for the prediction which is to be stored in a memory, namely the memory capacity.

Moreover, when the original video frame size is intended for a small screen used for mobile applications, the N×N pixel block occupies a reasonably wide area with respect to the video frame size. In other words, the average separated signal (AC component) can represent components such as edges representing the direction of an image pattern. For a signal in which respective color components such as R, G, and B hold patterns/ structures of an image, the N×N pixel blocks of the three components at the same spatial position are mutually correlated in terms of the structure of the image. Therefore, the AC components of the respective color components are highly correlated, and an effect of removal of the correlations increases.

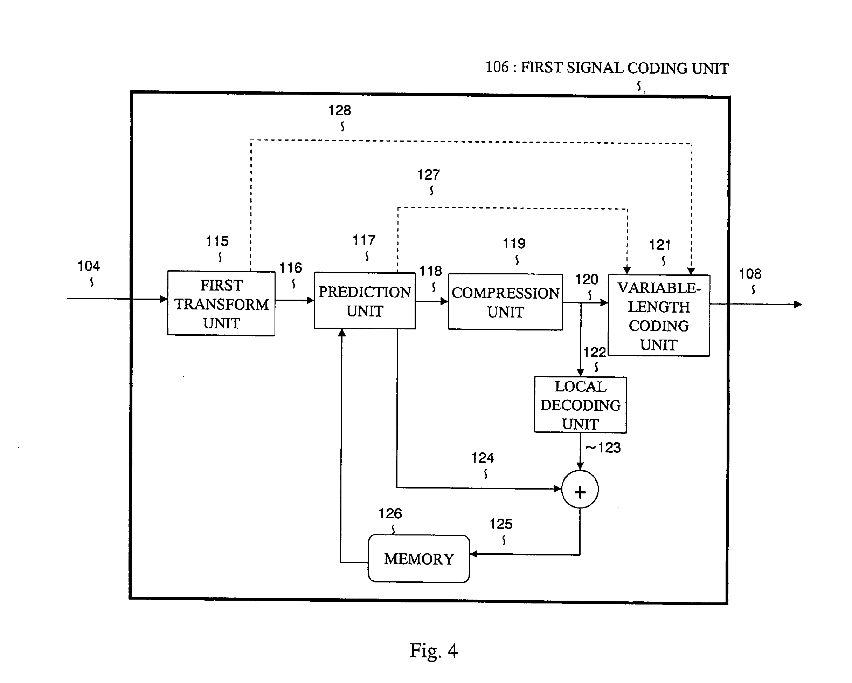

In FIG. 1, the first signal coding unit 106 carries out the coding for the DC image formed of the averages 104. FIG 4 illustrates an internal configuration of the first signal coding unit 106. In FIG 4, the input signal inputs the input DC image formed of the averages 104 in a unit of the (M/N)x(M/N) pixel block. In the following section, M/N is represented by K. A first transform unit 115 applies, to a set x of three color component samples of each pixel of a K×K pixel block, a transform according to a transform $A_i$, which removes correlations between the color components, thereby obtaining a set of three samples y 116.

$$y=A_i x$$

On this occasion, i denotes a type of the transform, and it is assumed that one or a plurality of transform methods are available. For example, these transforms include no transform ($A_i$ is a unit matrix), an RGB to YUV transform, and a Karhunen-Loeve transform (KLT). When i takes a plurality of values, namely, when a plurality of transforms are available, as first transform processing instruction information 128 for specifying the transform method, i of $A_i$ actually used is sent for coding to a variable-length coding unit 121, and is multiplexed with the bit stream 108. According to this embodiment, a unit for the coding of the first transform processing instruction information 128 is a video sequence, and a signal space in which samples of the respective color components are defined is uniquely specified throughout the signal processing inside the first signal coding unit 106. However, the coding may be carried out in another data unit such as picture, slice, or macroblock.

The prediction unit 117 predicts samples of the respective color components in the K×K pixel block within a frame and between frames, thereby obtaining prediction error signals 118. A compression unit 119 applies transform processing such as the DCT (discrete cosine transform) to the prediction error signals 118, removes signal correlations, and then quantizes resulting signals into DC compressed data 120. The DC compressed data 120 is coded through the entropy coding by the variable-length coding unit 121, is output as the bit stream 108, and is also sent to a local decoding unit 122, and decoded prediction error signals 123 are obtained. The decoded prediction error signals 123 are respectively added to predicted signals 124 used for generating the prediction error signals 118, and DC decoded signals 125 are obtained. The DC decoded signals 125 are stored in a memory 126 in order to generate the predicted signals 124 for the subsequent averages 104. It should be noted that parameters for predicted signal generation 127 determined by the prediction unit 117 in order to obtain the predicted signals 124 are sent to the variable-length coding unit 121, and are output as the bit stream 108. On this occasion, the parameters for predicted signal generation 127 contain, for example, the intra prediction mode indicating how the spatial prediction is carried out in a frame, and motion vectors indicating the quantity of motion between frames.

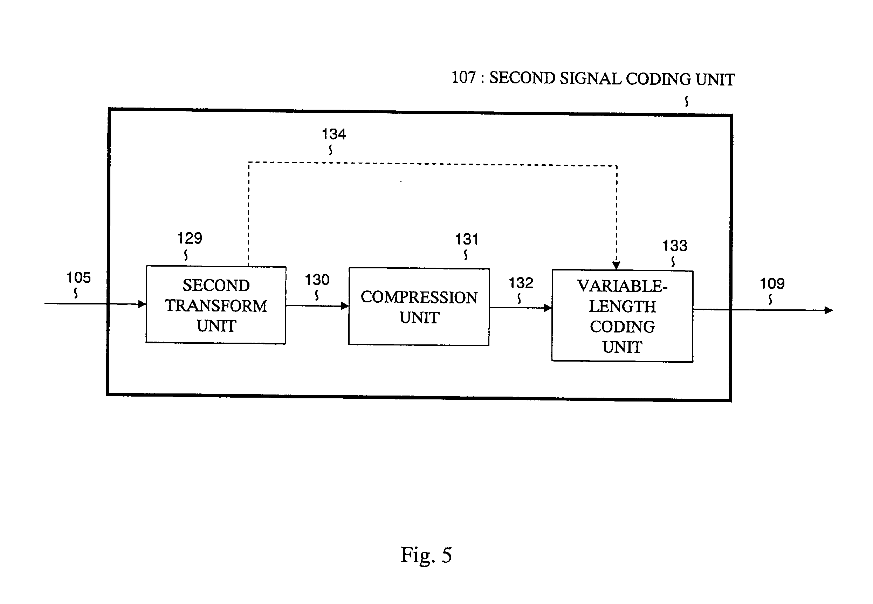

In FIG. 1, the second signal coding unit 107 carries out the coding for the AC image formed of the average separated signal 105. FIG 5 illustrates an internal configuration of the second signal coding unit 107. In FIG. 5, the input signal inputs the input AC image formed of the average separated signal 105 in a unit of the M×M pixel block. A second transform unit 129 applies, to a set x' of three color component samples of each pixel of the M×M pixel block, a transform according to a transform $B_j$, which removes correlations between the color components, thereby obtaining a set of three samples y' 130.

$$y'=B_j x'$$

On this occasion, j denotes a type of the transform, and it is assumed that one or a plurality of transform methods are available. For this transform, a group of a plurality of KLTs (Karhunen-Loeve transforms) optimally designed for certain signal patterns in advance are used. The second transform unit 129 selects a transform which best removes signal correlations in terms of color component (which concentrates the power on a specific signal component) in a unit of the M×M pixel block out of the transforms $B_j$s, thereby obtaining a set of three samples y' 130, and sends an index j specifying the used transform method as second transform processing instruction information 134 to a variable-length coding unit 133, thereby multiplexing the index j with the bit stream 109. Inside the second signal coding unit 107, the processing applied to the samples of the M×M pixel block of the average separated signals 105 is coding using none of other spatial and temporal signal dependences, and thus the second transform processing information 134 can be multiplexed with the bit stream while the unit for multiplexing is switched among any of units including the M×M pixel block (or combination of a plurality of M×M pixel blocks), the video frame, and the video sequence.

A compression unit 131 applies transform processing such as the DCT (discrete cosine transform) to the set of three samples y' 130, thereby removing signal correlations in terms of the spatial direction, and quantizes a resulting set of samples into AC compressed data 132. The methods and the parameters for the quantization used by the compression unit 119 of the first signal coding unit 106 and the compression unit 131 of the second signal coding unit 107 may be the same, or different quantization methods (for example, scalar quantization and vector quantization, or linear quantization and nonlinear quantization) and/or different quantization parameters may be used. The AC compressed data 132 is coded through the entropy coding by the variable-length coding unit 133, and is output as the bit stream 109. The second signal coding unit 107 does not make spatial and temporal predictions, and thus does not need components such as the local decoding unit 122 and the memory 126 for storing images referred for the prediction as in the first coding unit 106, resulting in a simple configuration. In addition, there is no need to transmit additional information corresponding to the parameters for predicted signal generation 127, resulting in suppression of the quantity of the coded data to be transmitted.

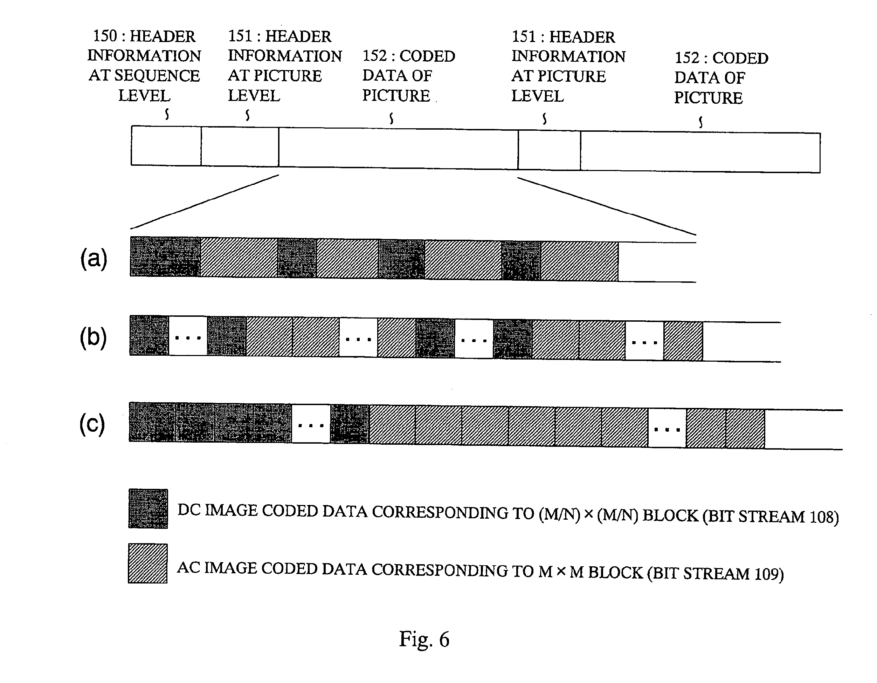

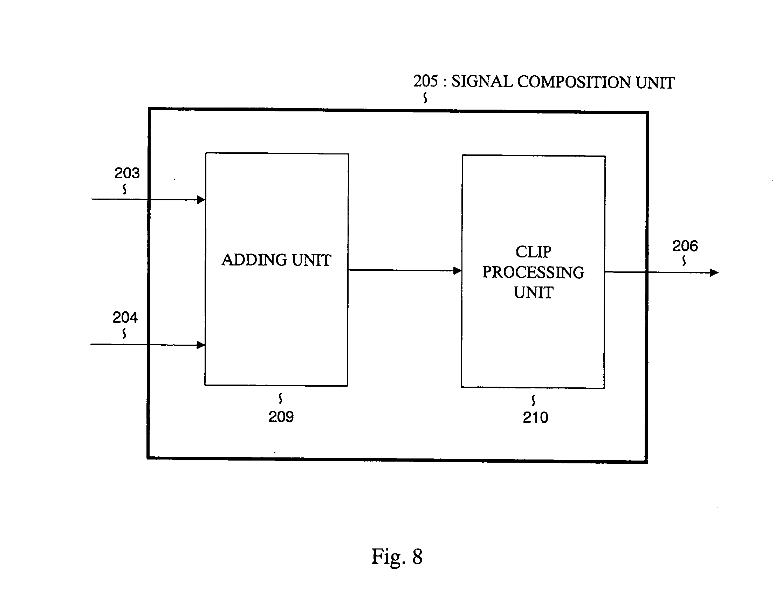

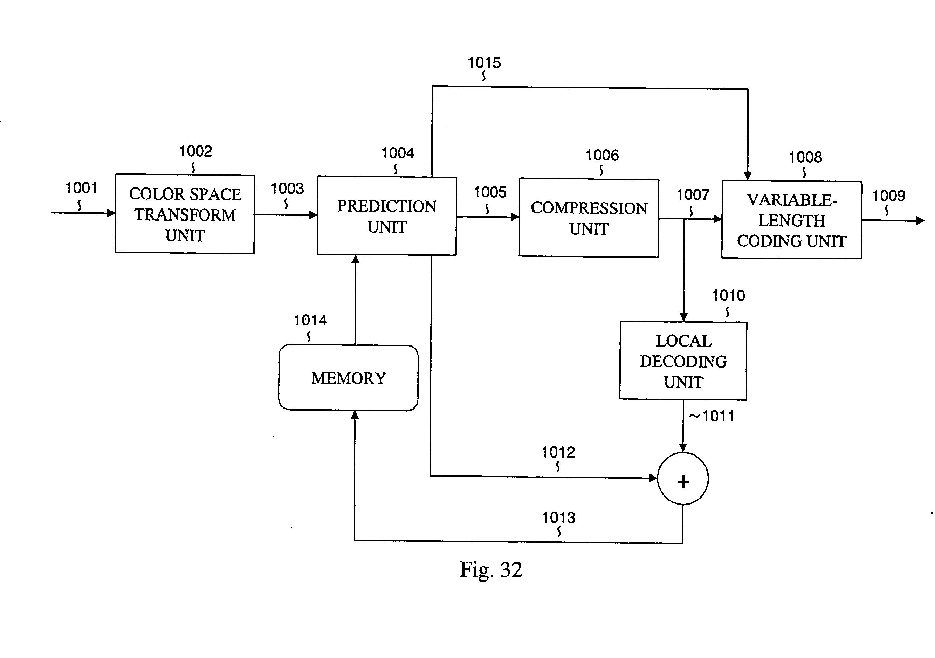

The structure of the bit stream 111 in the coding device according to the first embodiment may take various forms (FIG. 6). The bit stream 111 is arranged in a sequence of header information at sequence level 150, header information at video frame (picture) level 151, and coded data of picture 152. The header information at sequence level 150 contains the numbers of pixels in the horizontal and vertical directions in the video frame, the first transform processing instruction information 128, the second transform processing instruction information 134 (when the transform $B_j$ is switched in a unit of sequence), and the like. The header information at picture level 151 contains the second transform processing instruction information 134 (when the transform $B_j$ is switched in a unit of picture) and the like. There is provided the configuration in which the pixel blocks, which are respectively the units of input to the first signal coding unit 106 and the second signal coding unit 107, occupy the same region (M×M pixel block) on the input signal 1001 or 1003 input to the coding device, and hence the coded data of picture 152 can take a form illustrated in FIG. 6A in which the bit streams 108 and 109 are multiplexed for each M×M pixel block. It should be noted that the input signal 100 and the coding unit block 102 correspond to the conventional input video signal 1001 and video signal to be coded 1003 of FIG. 32. Moreover, the first signal coding unit 106 and the second signal coding unit 107 can carry out the coding processing independently, and thus, when the block size as the unit for the coding processing by the first signal coding unit 106 is the size of the M×M pixel block, the corresponding data coded by the second coding unit 107 is data of the MN×MN pixel block, resulting in a bit stream configuration illustrated in FIG. 8B. Moreover, the signal to be coded by the first signal coding unit 106 corresponds to an image reduced in size compared with that represented by the input signal 1001 or 1003, and hence there may be provided a configuration in which the bit stream 108, which is the coded data thereof, is accumulated on a first portion of the bit stream 111, and then the bit stream 109 is multiplexed as illustrated in FIG 8C. The bit stream 109 does not have influence on decoding of the bit stream 108, and hence this configuration provides an effect that partial decoding applied only to the DC image obtained from the bit stream 108 may be carried out to decode only the image for a small screen.

2. Overview of Operation of Decoding Device

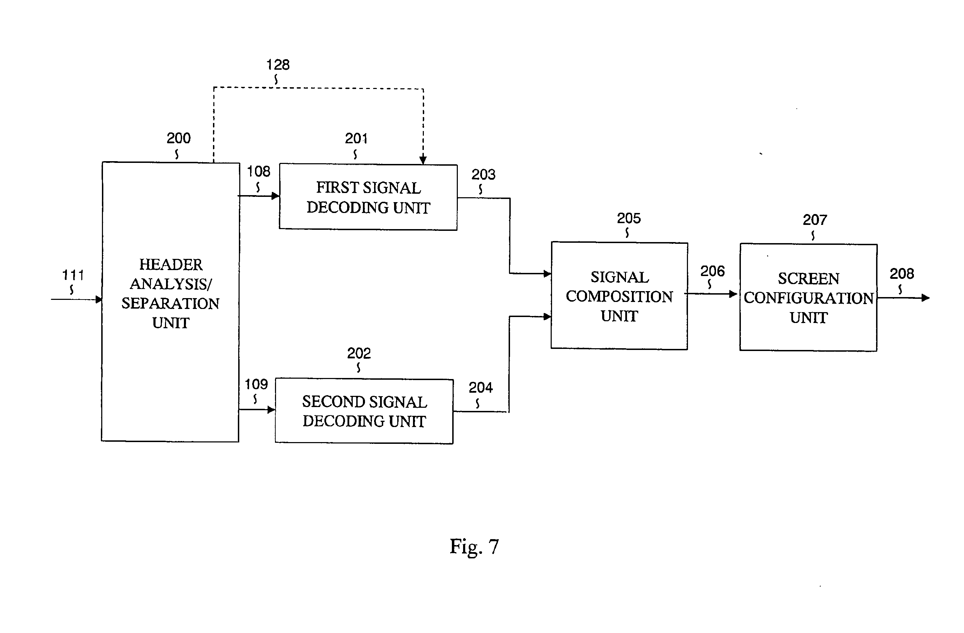

A decoding device of FIG. 7 receives the bit stream 111 output by the coding device of FIG. 1, and carries out decoding processing for each the M×M pixel block, thereby recovering each video frame. In FIG 7, a header analysis/separation unit 200 decodes upper-level header information such as the header information at sequence level 150 and the header information at picture level 151 from the bit stream 111, separates, from the coded data of picture 152 arranged according to a predetermined rule as illustrated in FIGS. 6A to 6C, the bit stream 108 generated by the first signal coding unit 106, and the bit stream 109 generated by the second signal coding unit 107, and passes them respectively to a first signal decoding unit 201, and a second signal decoding unit 202.

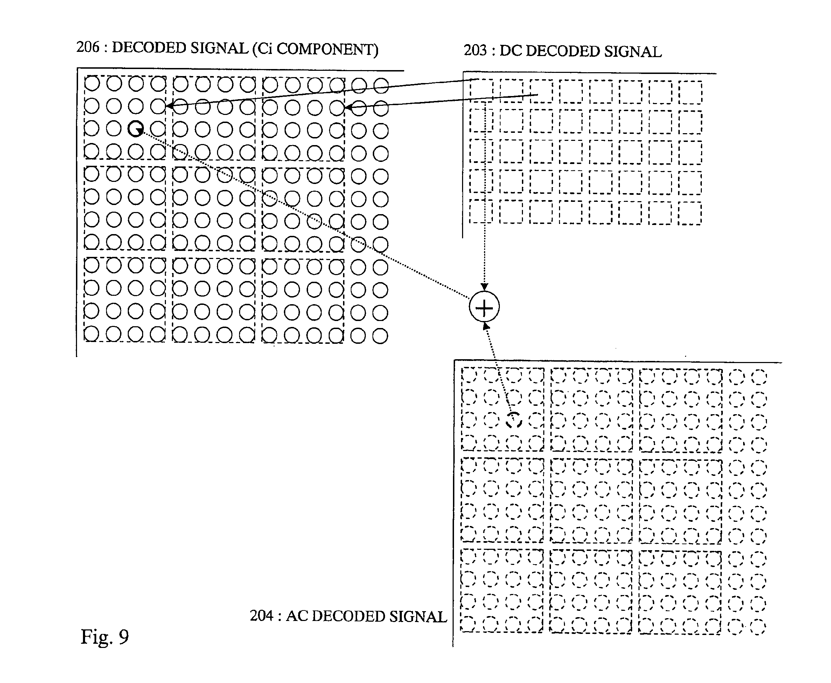

The first signal decoding unit 201 obtains, from the bit stream 108, DC decoded signals 203 corresponding to the (M/N)×(M/N) pixel block in which one pixel is formed of three color components C0, C1, and C2 in the 4:4:4 format. The second signal decoding unit 202 obtains, from the bit stream 109, AC decoded signals 204 corresponding to the M×M pixel block in which one pixel is formed of the three color components C0, C1, and C2 in the 4:4:4 format. These decoded signals are input to a signal composition unit 205, and decoded signals 206 corresponding to the M×M pixel block are obtained. In the signal composition unit 205 (FIG. 8), an adding unit 209 adds, for each N×N pixel block, each sample of the DC decoded signals 203, which is a decoded value of the average of the N×N pixel block, to each sample of the AC decoded signals 204, and a clip processing unit 210 carries out clipping through a pixel gradation of the decoded signals 206, and outputs the decoded signals 206. FIG 9 illustrates an example of the processing when N=4. When M=16, for example, the DC decoded signal 203 is formed of pixels having the number thereof 1/16 of the number of pixels corresponding to the decoded signal. Each pixel in the 4x4 pixel block enclosed by dotted lines of the decoded signal 206 is obtained by adding a pixel at a corresponding position of the AC decoded signal 204 and a corresponding average of the DC decoded signal 203 to each other. The decoded signals 206 corresponding to the M×M pixel block are arranged in a video frame by a screen configuration unit 207, thereby obtaining a decoded video frame 208.

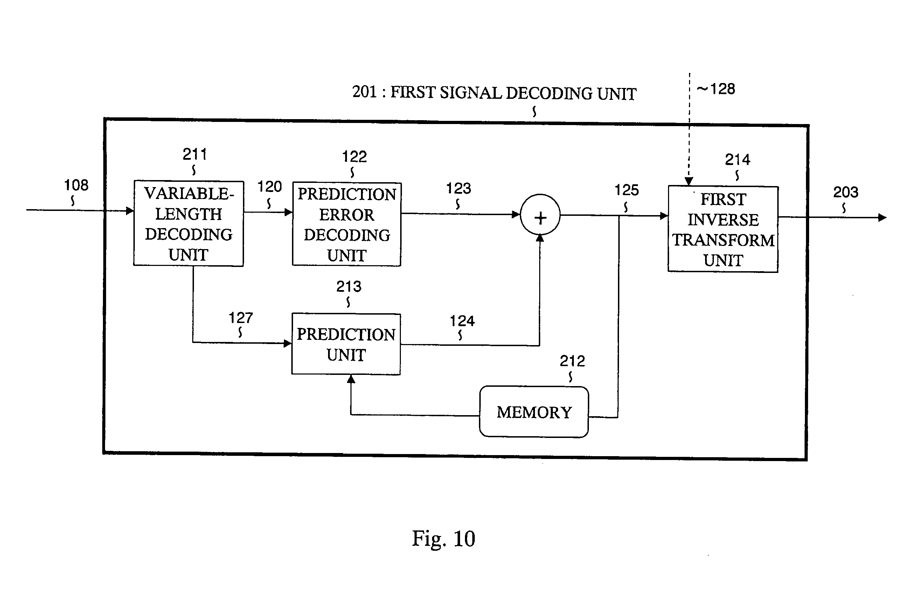

In FIG. 7, the first signal decoding unit 201 carries out the decoding processing for the DC image. FIG 10 illustrates an internal configuration of the first signal decoding unit 201. A variable-length decoding unit 211 extracts, from the bit stream 108, the parameters for predicted signal generation 127, which are used for generating the predicted signals 124 by using the DC decoded signal 125 stored in a memory 212, and the DC compressed data 120 obtained by applying the compression coding to the prediction error signal, and passes them to a prediction unit 213 and a prediction error decoding unit 122 (operating in the same way as the local decoding unit 122), respectively. The prediction unit 213 obtains the temporal and spatial predicted signals 124 by using the parameters for predicted signal generation 127 such as motion vectors and the intra prediction mode and the DC decoded signals 125 stored in the memory 212. The prediction error decoding unit 122 applies inverse quantization to the DC compressed data 120, and then applies inverse transform processing such as the DCT (discrete cosine transform), thereby obtaining the decoded prediction error signals 123. By adding the predicted signals 124 and the decoded prediction error signals 123, the DC decoded signals 125 are obtained. The DC decoded signals 125 are stored in the memory 212 in order to generate the predicted signals 124 for the subsequent decoding processing. Finally, a first inverse transform unit 214 applies a transform, which is an inverse of the transform applied by the first transform unit 115 to the set x of three color component samples of each pixel of the K×K pixel block (K=M/N), to the DC decoded signals, thereby obtaining final DC decoded signals 203. For this purpose, the first inverse transform unit 214 refers to the first transform processing instruction information 128, thereby identifying an inverse transform $A_i^{-1}$ used upon the coding.

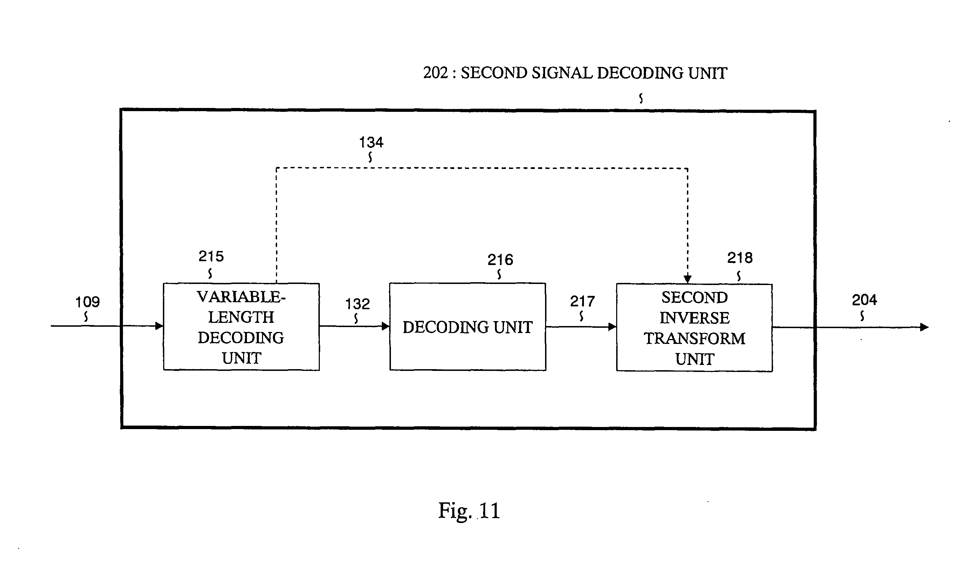

In FIG 7, the second signal decoding unit 202 carries out the decoding processing for the AC image. FIG. 11 illustrates an internal configuration of the second signal decoding unit 202. A variable-length decoding unit 215 extracts, from the bit stream 109, the AC compressed data 132 obtained by applying the compression coding to the AC image signals formed of the respective color components C0, C1, and C2, and passes the AC compressed data 132 to a decoding unit 216. The decoding unit 216 applies inverse quantization to the AC compressed data 132, and then applies inverse transform processing such as the DCT (discrete cosine transform), thereby obtaining AC decoded signals 217. Finally, a second inverse transform unit 218 applies a transform, which is inverse of the transform applied by the second transform unit 129 to the set x' of three color component samples of each pixel of the M×M pixel block, to the AC decoded signals 217, thereby obtaining the final AC decoded signals 204. For this purpose, the second inverse transform unit 218 refers to the second transform processing instruction information 134, thereby identifying an inverse transform $B_j^{-1}$ used upon the coding. FIG 11 illustrates a configuration in which the second transform processing instruction information 134 is extracted by the variable-length decoding unit 215 in a unit of the M×M pixel block, and the inverse transform $B_j^{-1}$ is applied by being switched for each M×M pixel block. It should be understood that the second transform processing instruction information 134 is configured for switching at the level of the picture or sequence. Inverse quantization methods and quantization parameters used by the prediction error decoding unit 122 and the decoding unit 216 may be the same, or different inverse quantization methods (for example, scalar quantization and vector quantization, or linear quantization and non-linear quantization) and/or different quantization parameters may be used. The quantization parameters are, usually upon the coding, multiplexed with the bit streams 108 and 109 in a unit of the M×M pixel block, are extracted by the variable-length decoding units 211 and 215, and are used by the prediction error decoding unit 122 and the decoding unit 216.

By configuring the coding device and the decoding device as described above, a video signal in the 4:4:4 format defined in an arbitrary color space can be efficiently coded through compression coding. By applying the spatial and temporal prediction processing only to DC image regions having a reduced resolution, there are provided effects that, for a high resolution video such as the HDTV, the prediction that is unlikely to be influenced by noise components and is suited for an image pattern can be carried out, and that the processing can be simplified due to the reduced number of pixels to be processed. On the other hand, for an AC image, the spatial and temporal prediction is not applied, and dependency on a periphery of each color component is thus not used. Further, an optimal transform can be selected for removing correlations between the color components, and hence the signal power concentration on a specific color component can be always increased according to the local signal characteristics of the AC component, resulting in efficient coding.

In the signal analysis unit 103 according to the first embodiment, the image signal is separated into the DC component and the AC component for each block, but there may be provided a configuration in which the separation is realized by arbitrary frequency transform means such as the DCT or wavelet transform, thereby separating a component to be coded by the first signal coding unit 106 and a component to be coded by the second signal coding unit 107. For example, there may be provided a configuration in which a signal formed of DC coefficients after the DCT as well as some AC coefficients in low frequency regions is coded by the first signal coding unit 106, and the rest of AC coefficients constituting components at relatively high frequencies are coded by the second signal coding unit 107.

Further, according to the first embodiment, the DC component is considered as a DC image obtained by reducing the original signal in size, one DC sample is considered as one pixel, and the prediction is carried out in a unit of the DC image of the $K \times K$ pixel block. However, there may be provided a configuration in which, when a spatial prediction is carried out in a frame, it is considered that the respective samples in the $N \times N$ pixel block, which is a unit for extracting the DC signal, have the same DC value, and the DC value is predicted by referring to surrounding pixels at the same resolution as the original signal. When a DC image is generated from the original signal ($M \times M$ pixel block) as described above, depending on the selection of N, a correlation between DC values adjacent to each other in a frame may be low, resulting in insufficient prediction performance. However, the configuration to carry out the prediction at the level of pixels having the same resolution as that of the original signal enables a prediction which restrains the decrease in spatial correlation. On the other hand, this method requires determination and decoding of the prediction mode for each $N \times N$ block, and thus it is necessary to code prediction mode information corresponding to the number of DC samples per $M \times M$ pixel block. Compared with this, when, as described above, the prediction is carried out for each DC image ($K \times K$ pixel block), only one piece of prediction mode information is necessary for each $M \times M$ pixel block. Therefore, various designs of the prediction method are available according to the characteristics of the signal to be coded, such as locally switching, for each coding unit block 102, between these methods according to a balance between the code quantity required for coding the prediction mode information and the prediction error power, or a balance between the overall code quantity including the transform coefficients and coding distortion caused by local decoding, or changing the switching method for each color component.

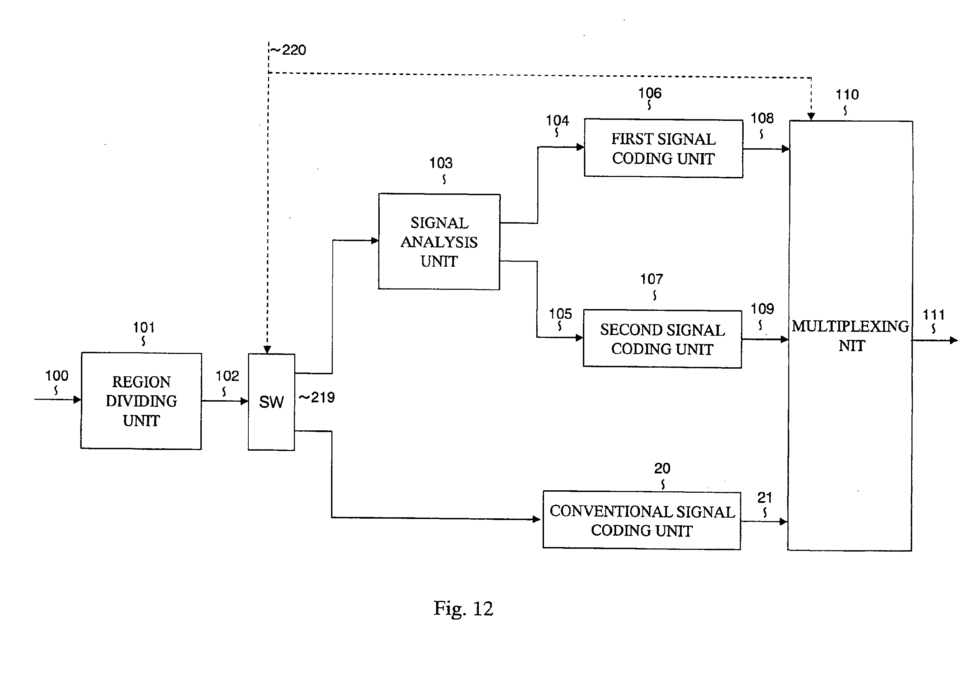

Due to unsteady characteristics of an image signal, depending on characteristics of the signal of the coding unit block 102, when the entire image is always separated into the DC component and the AC component to code the DC component and the AC component as in the first embodiment, a decrease in coding efficiency is possibly caused. In order to avoid this problem, for example, there may be provided a configuration in which a conventional coding processing unit as illustrated in FIG. 32 is provided on the side of the coding device, and the coding processing is switched (FIG. 12). A switch (SW) 219 for this switching determines, by a switching control signal 220, to which path for the coding processing the signal of the coding unit block 102 is sent. The switching control signal 220 may be controlled, for example, to select optimal coding means between the coding by the first signal coding unit 106 and the second signal coding unit 107 and the coding by the conventional signal coding unit 20 in terms of the rate/distortion measure based on the balance between the code quantity and the coding distortion, or may be controlled to determine, according to a result of analysis of characteristics/activities of the signal of the coding unit block 102, which path for the coding processing is suited. Moreover, in order to maintain compatibility with a conventional decoding device which decodes a bit stream coded by the conventional coding unit 20, by controlling the switch 219 so as to always generate a bit stream coded only by the conventional coding unit 20, the bit stream which can be decoded by the conventional decoding device can be output.

By multiplexing the switching control signal 220 with the bit stream in a predetermined data unit, the switching control signal 220 may be decoded and used on the side of the decoding device, and, without carrying out, on the decoding device side, processing of determining the switching control carried out on the coding device side, the bit stream output by the coding device of FIG. 12 can be decoded using a simple configuration. The switching control signal 220 may be multiplexed in a unit of the coded data of the coding unit block 102, or there may be provided a configuration in which the switching control signal 220 is multiplexed at an arbitrary level such as slice, picture, or sequence.

Second Embodiment

In a second embodiment, a description is given of a coding device for coding a video frame input in the 4:4:4 format in a unit of a rectangular region of $M \times M$ pixels for respective color components by using intra-frame and inter-frame adaptive predictions, and a corresponding decoding device. The coding device and the decoding device according to the second embodiment, as in the first embodiment, are configured to separate images formed of the respective color components of the input signal into the DC components and the AC components, code the DC components by means of prediction limited to the respective color components and predict the AC components by using correlations between the color components. A difference from the first embodiment is a configuration in which a signal of a reference color component is decoded independently of the other components, and the other color components are coded by the prediction coding using prediction mode information, a local decoding image signal, and the like used for coding the reference color component signal.

1. Overview of Operation of Coding Device

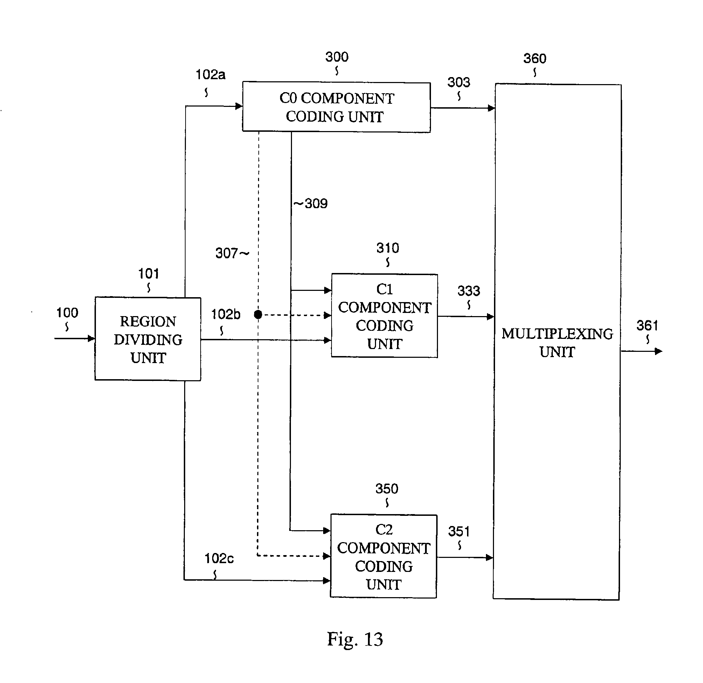

FIG. 13 illustrates a configuration of an image coding device according to a second embodiment. Input signals 100 in the 4:4:4 format are each formed of signals of three color components C0, C1, and C2, and are divided by a region dividing unit 101 into coding unit blocks 102 each formed of a rectangular block of a M×M pixel size for the C0, C1, and C2 components. In the following section, input image signals of the C0, C1, and C2 components which are components of the coding unit block 102 are respectively denoted by 102a, 102b, and 102c. It is assumed that all of the signals are formed of M×M pixels.

1.1 Coding Processing for Reference Color Component (C0 Component)

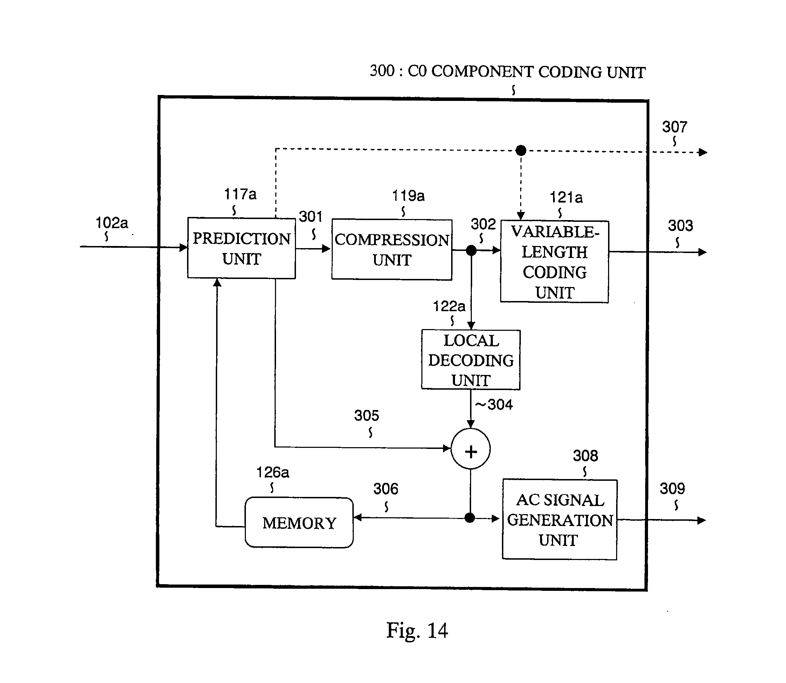

In the coding device according to the second embodiment, the C0 component 102a is a signal of the reference color component. FIG. 14 illustrates a configuration of a C0 component coding unit 300 for coding the C0 component 102a. The C0 component coding unit 300 has a configuration similar to the conventional coding processing unit 20 and the first signal coding unit 106 according to the first embodiment. First, the C0 component 102a is input to a prediction unit 117a, and samples in the N×N pixel block are predicted in the frame and between the frames, and a prediction error signal 301 is obtained. It should be noted that the prediction unit 117a has a configuration in which a part for carrying out the prediction processing for the C0 component is extracted from the prediction unit 117 which is the component of the first signal coding unit 106. A compression unit 119a applies transform processing such as the DCT (discrete cosine transform) to the prediction error signal 301, thereby removing signal correlations, and quantizes a resulting signal into compressed data 302. The compressed data 302 is coded through the entropy coding by a variable-length coding unit 121a, is output as a bit stream 303, and is also sent to a local decoding unit 122a, and a decoded prediction error signal 304 is obtained. The decoded prediction error signal 304 is added to the predicted signal 305 used for generating the prediction error signal 301, thereby obtaining a decoded signal 306. The decoded signal 306 is stored in a memory 126a in order to generate the predicted signal 305 for the subsequent signal to be coded 102a. It should be noted that parameters for predicted signal generation 307 determined by the prediction unit 117a in order to obtain the predicted signal 305 are sent to the variable-length coding unit 121a, and is output as the bit stream 303. On this occasion, the parameters for predicted signal generation 307 contain, for example, the intra prediction mode indicating how the spatial prediction is carried out in a frame, and motion vectors indicating the quantity of motion between frames.

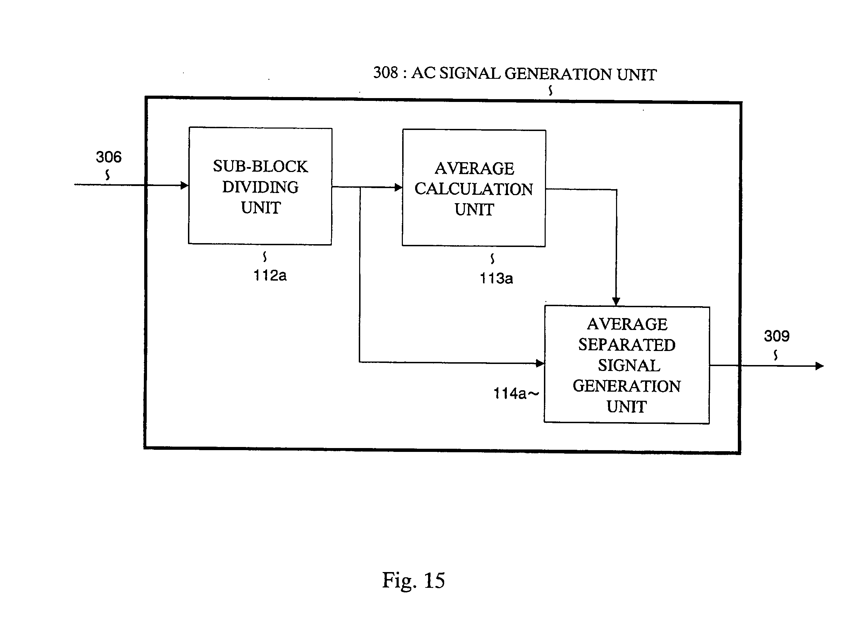

Moreover, the decoded signal 306 is input to an AC signal generation unit 308, and a reference AC signal 309 is generated. FIG. 15 illustrates an internal configuration of the AC signal generation unit 308. Basically, the AC signal generation unit 308 can be realized by borrowing the configuration of the signal analysis unit 103 according to the first embodiment, and the configuration is arranged such that the respective internal components carry out the processing only for the C0 signal in the signal analysis unit 103, and an average calculation unit 113a does not feed the output to the outside. The parameters for predicted signal generation 307 output by the C0 component coding unit 300 are used for the prediction coding of the DC signals of the C1 and C2 components, and the reference AC signal 309 is used for the prediction coding of the AC signals of the C1 and C2 components (described later).

1.2 Coding Processing for C1 Component

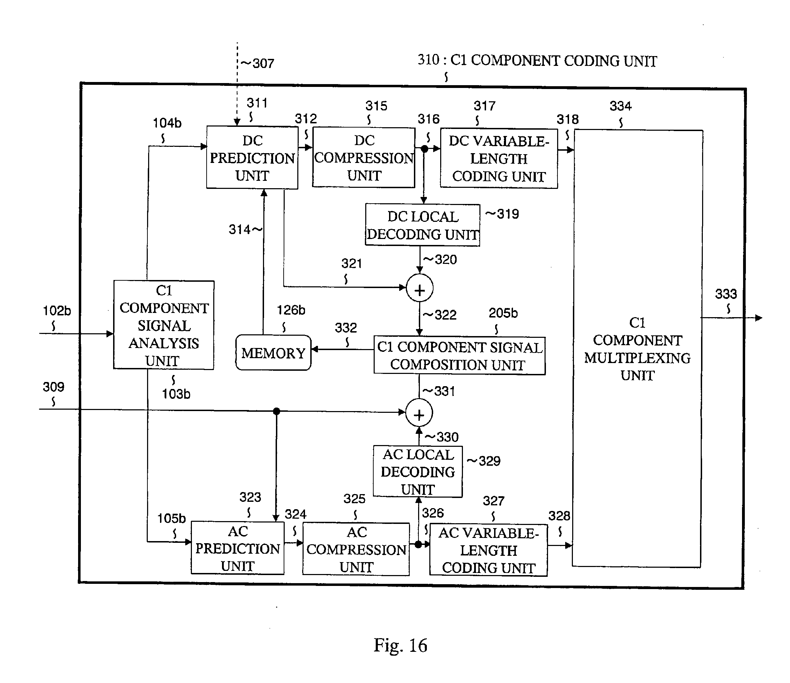

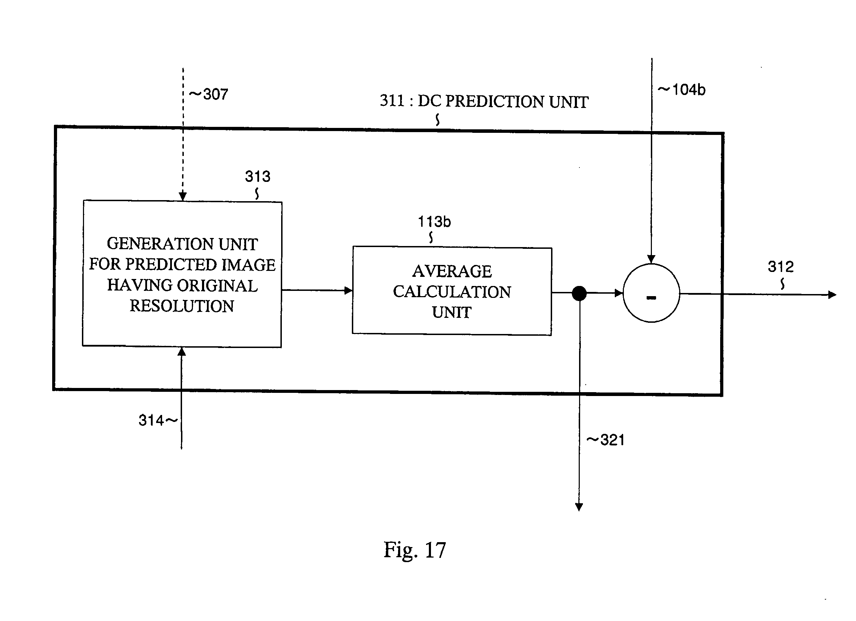

The coding of the C1 component is carried out by a C1 component coding unit 310. An internal configuration thereof is illustrated in FIG. 16. First, the C1 component 102b is separated by a C1 component signal analysis unit 103b (having a configuration for processing only the C1 component out of the configuration of the signal analysis unit 103 according to the first embodiment) into a DC signal 104b and an AC signal 105b. The DC signal 104b is predicted by a DC prediction unit 311, and a DC prediction error signal 312 is output. FIG. 17 illustrates an internal configuration of the DC prediction unit 311. The DC prediction unit 311 predicts the DC signal 104b which is assigned to each N×N pixel block having the original resolution. Therefore, first, an generation unit for predicted image having original resolution 313 generates, from the parameters for predicted signal generation 307 (obtained from the result of the prediction of the N×N pixel block of the C0 component) and a locally decoded image having original resolution 314 in a memory 126b, a predicted signal 321 for the signal of the C1 component at a position of the N×N pixel block in the coding unit block 102 corresponding to the position of the reference color component C0 at which the parameters for predicted signal generation 307 are generated is generated. An average thereof is obtained by an average calculation unit 113b, and is subtracted from the DC signal 104b to obtain the DC prediction error signal 312. The DC prediction error signal 312 is quantized by a DC compression unit 315, is output as DC compressed data 316, is coded through the entropy coding by a DC variable-length coding unit 317, and is multiplexed with a bit stream 318. The parameters for predicted signal generation 307 may be directly used, or may be modified for the C1 component, and then used, which is not illustrated. For example, by finely adjusting information on motion vectors according to characteristics of the signal of each color component to obtain the DC predicted value, a better prediction result may be obtained. There may be provided a configuration in which difference information obtained by the correction is sent to the DC variable-length coding unit 317, and is multiplexed with the bit stream 318. Moreover, the DC compressed data 316 is decoded into a local decoded DC prediction error signal 320 by a DC local decoding unit 319, and the local decoded DC prediction error signal 320 is added to the DC predicted signal 321 used by the DC prediction unit 311 to obtain the DC prediction error signal 312 to generate a local decoded DC signal 322.

On the other hand, the AC signal 105b of the C1 component separated by the C1 component signal analysis unit 103b is predicted by an AC prediction unit 323 using, as a predicted value, the reference AC signal 309 output by the C0 component coding unit 300 which is provided for the reference color component, and an AC prediction error signal 324 is obtained. An AC compression unit 325 applies transform processing such as the DCT (discrete cosine transform) to the AC prediction error signal 324, thereby removing signal correlations, and quantizes a resulting signal into AC compressed data 326. The AC compressed data 326 is coded through the entropy coding by an AC variable-length coding unit 327, is output as a bit stream 328, and is also sent to an AC local decoding unit 329, and a local decoded AC prediction error signal 330 is obtained. The local decoded AC prediction error signal 330 is added to the reference AC signal 309 used to generate the AC prediction error signal 324, thereby obtaining a local decoded AC signal 331. Finally, in a signal composition unit for C1 component 205b (having a configuration for processing only the C1 component out of the signal composition unit 205), the local decoded AC signal 331 is added to the local decoded DC signal 322 to reconstruct a decoded signal 332 having the original resolution, and the decoded signal 332 is stored in a memory 126b to be used as a reference to predict the subsequent signal to be coded 102b. Then, the C1 component multiplexing unit 334 multiplexes the bit streams 318 and 328 according to a predetermine rule, and outputs a bit stream 333.

The prediction coding of the C1 component as mentioned above provides the following effects. The advantage of the initial separation of the input signal into the DC and AC components is the same as that described in the first embodiment, and, according to the second embodiment, the separated DC signal is predicted, by using the result of the prediction of the C0 component serving as the reference color component directly or after a slight adjustment, based on the signal of the C1 component. In the case of the RGB signal, texture patterns of the respective components C0, C1, and C2 are highly correlated, a component having a large signal power, such as the DC signal, serves as a factor of determining the color configuration, and it is expected that a high prediction efficiency is obtained by utilizing correlations limited to the own color component rather than between color components. On the other hand, it is expected that the AC signals, which represent elements such as patterns in an image and edge patterns, are highly correlated between the color components, and hence, based on this fact, using the local decoded signal of the reference color component C0 provides a high prediction efficiency. The predicted image of the DC signal of the C1 component is generated using the parameters for predicted image generation 307 determined for the C0 component directly or with a slight adjustment, and hence it is not necessary to code additional information. Moreover, the AC signal is predicted using the same signal as the decoded image signal of the reference color component, which is completely recovered on the decoding side, and thus it is not necessary to transmit special additional information, resulting in efficient coding.

1.3 Coding Processing for C2 Component

The coding processing for the C2 component is substantially realized by processing equivalent to the coding processing for the C1 component. This processing is carried out by a C2 component coding unit 350, contents of internal processing thereof includes using a signal analysis unit 103c for the C2 component as a signal analysis unit for separating an input signal into the DC and AC signals, and using, in place of the memory 126b, a memory 126c for storing a local decoded image for the C2 component. For the rest, the configuration of the C1 component coding unit 310 can be directly used.

2. Overview of Operation of Decoding Device

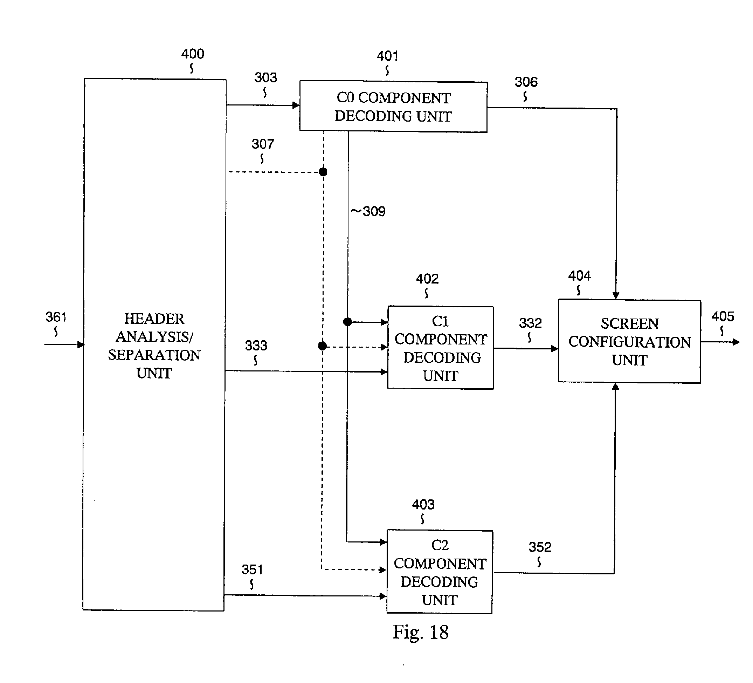

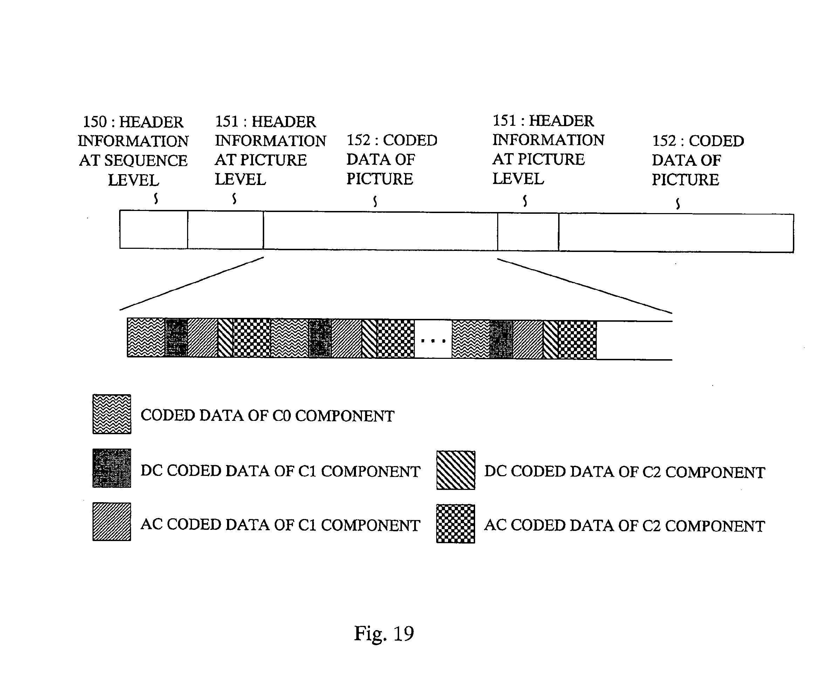

A decoding device of FIG. 18 receives the bit stream 361 output by the coding device in FIG 13, and carries out decoding processing for each M×M pixel block, thereby recovering each video frame. FIG. 19 illustrates a configuration of the bit stream 361. The coded data of picture 152 is formed of coded data for the C0 component, the respective DC and AC coded data of the C1 component, and the respective DC and AC coded data of the C2 component. In FIG. 18, a header analysis/separation unit 400 decodes upper-level header information such as the header information at sequence level 150 and the header information at picture level 151 from the bit stream 361, separates, from the coded data of picture 152 arranged according to the rule illustrated in FIG 19, the bit stream 303 generated by the C0 component coding unit 300, the bit stream 333 generated by the C1 component coding unit 310, and the bit stream 351 generated by the C2 component coding unit 350, and passes them respectively to a C0 component decoding unit 401, a C1 component decoding unit 402, and a C2 component decoding unit 403.

The C0 component decoding unit 401 obtains, from the bit stream 303, a C0 component decoded signal 306 of the M×M pixel block. The C1 component decoding unit 402 obtains, from the bit stream 333, the parameters for predicted image generation 307 output by the C0 component decoding unit, and the reference AC signal 309, a C1 component decoded signal (decoded signal having the original resolution) 332 of the M×M pixel block. The C2 component decoding unit 403 obtains, from the bit stream 351, the parameters for predicted image generation 307 output by the C0 component decoding unit, and the reference AC signal 309, a C2 component decoded signal 352 of the M×M pixel block. They are arranged on a video frame by a screen configuration unit 404, and a decoded video frame 405 is obtained.

2.1 Decoding Processing for Reference Color Component (C0 Component)

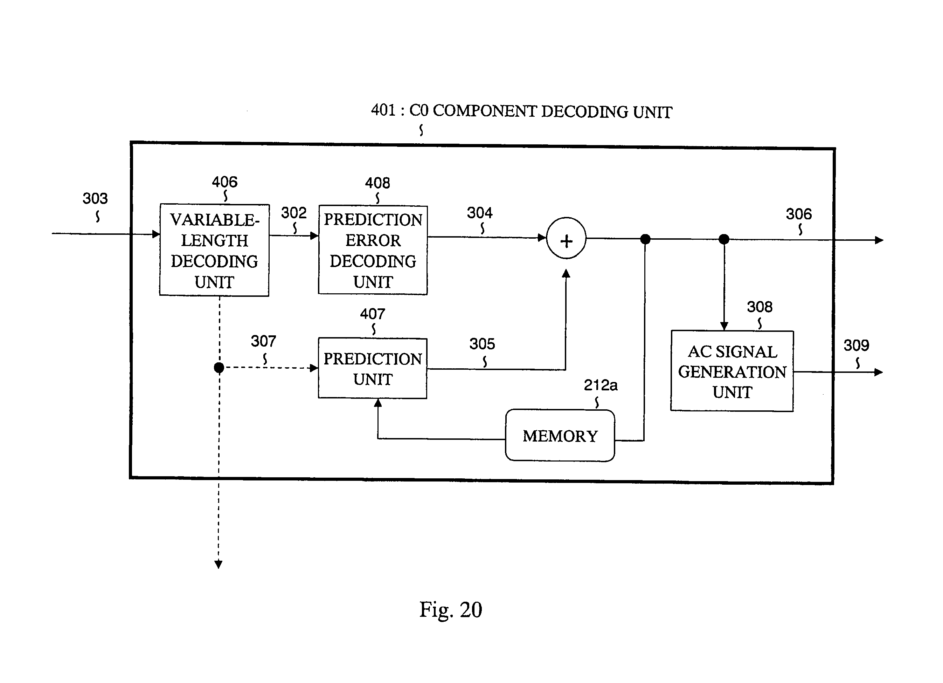

FIG 20 illustrates an internal configuration of the C0 component decoding unit 401. A variable-length decoding unit 406 extracts, from the bit stream 303, the parameters for predicted signal generation 307 used for generating the predicted signal 305, and the compressed data 302 which is obtained by coding the prediction error signal through the compression coding, and passes them respectively to a prediction unit 407 and a prediction error decoding unit 408. The prediction unit 407 obtains, by using the parameters for predicted image generation 307, such as the motion vectors and the intra prediction mode, and the C0 component decoded signal 306 stored in a memory 212a (having a configuration for storing only the C0 component out of the memory 212 according to the first embodiment), the temporal and spatial predicted signal 305. The prediction error decoding unit 408 applies the inverse quantization to the compressed data 302, and then applies the inverse transform processing such as the DCT (discrete cosine transform), thereby obtaining the decoded prediction error signal 304. By adding the predicted signal 305 and the prediction error signal 304 to each other, the C0 component decoded signal 306 is obtained. The C0 component decoded signal 306 is stored in the memory 212a in order to generate the predicted signal 305 for the subsequent decoding processing. Moreover, the C0 component decoded signal 306 is input to the AC signal generation unit 308, and the reference AC signal 309 is generated and output.

2.2 Decoding Processing for C1 Component

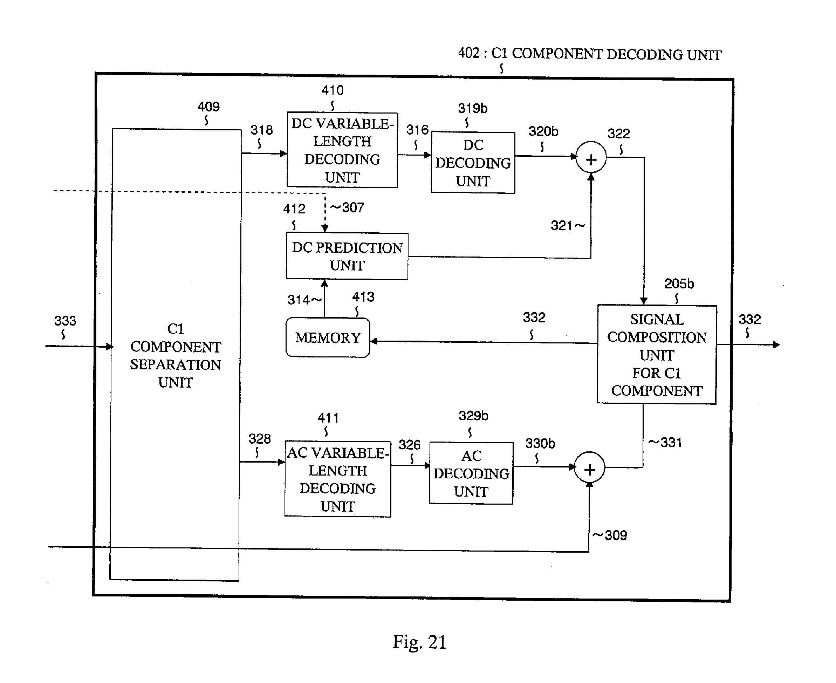

FIG. 21 illustrates an internal configuration of the C1 component decoding unit 402. A C1 component separation unit 409 separates, from the bit stream 333, the bit stream 318 obtained by applying the compression coding to the DC signal, and the bit stream 328 obtained by applying the compression coding to the AC signal. The bit stream 318 is input to a DC variable-length decoding unit 410, and the DC compressed data 316 is output. The bit stream 328 is input to an AC variable-length decoding unit 411, and the AC compressed data 326 is output. In order to discriminate the bit stream 318 and the bit stream 328 from each other, there may be provided a configuration in which an appropriate synchronization code is inserted into the bit stream 333 for detection, or the C1 component separation unit 409 includes the configurations of the DC variable-length decoding unit 410 and the AC variable-length decoding unit 411 to sequentially carry out the variable-length decoding in an order of DC and AC.

A DC decoding unit 319b (operating in the same way as the DC local decoding unit 319) decodes the DC compressed data 316 through the inverse quantization, and outputs a decoded DC prediction error signal 320b. A DC prediction unit 412 has a configuration including the components of the DC prediction unit 311 (FIG. 17) except for the processing of obtaining the DC prediction error signal 312. The generation unit for predicted image having original resolution 313 generates, from the parameters for predicted signal generation 307 (obtained from the result of the prediction of the N×N pixel block of the C0 component) and the locally decoded image having original resolution 314 in a memory 413, the DC predicted signal 321 for the signal of the C1 component at a position of the N×N pixel block in the coding unit block 102 corresponding to the position of the reference color component C0 at which the parameters for predicted signal generation 307 are generated. The decoded DC prediction error signal 320b and the DC predicted signal 321 are added, clipping processing is applied to a result of the addition, and a resulting signal is output as the decoded DC signal 322.

On the other hand, an AC decoding unit 329b (operating in the same way as the AC local decoding unit 329) applies the inverse quantization to the AC compressed data 326, applies the inverse transform processing such as the DCT (discrete cosine transform), and obtains a decoded AC prediction error signal 330b. The decoded AC prediction error signal 330b is added to the reference AC signal 309 output by the C0 component decoding unit 401, clipping processing is applied to a result of the addition, and the decoded AC signal 331 is obtained. Finally, in the signal composition unit for C1 component 205b, the decoded AC signal 331 is added to the decoded DC signal 322, resulting in the reconstructed decoded signal 332 having the original resolution, and the decoded signal 332 is stored in the memory 413 to be referred for prediction in the subsequent decoding processing.

2.3 Decoding Processing for C2 Component

The decoding processing for the C2 component is substantially realized by processing equivalent to the decoding processing for the C1 component. This processing is carried out by the C2 component decoding unit 403, contents of internal processing thereof includes only processing, in place of the bit stream 333 obtained by coding the C1 component, the bit stream 351 containing the coded data of the C2 component coded using the same method, using a signal composition unit 205c (not shown) for the C2 component as a signal composition unit for composing the decoded DC and AC signals, and using, in place of the memory 413, a memory 414 (not shown) for storing a local decoded image for the C2 component. For the rest, the configuration of the C1 component decoding unit 402 can be directly used.

By configuring the coding device and the decoding device as described above, a video signal in the 4:4:4 format defined in an arbitrary color space can be efficiently coded through compression coding. By carrying out the temporal/spatial prediction processing in the DC image region, for a high resolution video such as the HDTV, prediction which is unlikely to be influenced by noise components and is suited for an image pattern can be carried out, and, for the AC image, because the decoded signal of the reference color component is used as the predicted value, correlation between color components can be removed to carry out efficient coding. Moreover, there is provided the configuration in which, for the prediction of the DC signal, the prediction mode of the reference color component is shared, and hence without transmitting additional needless information, efficient coding can be carried out.

Due to unsteady characteristics of an image signal, depending on characteristics of the signal of the coding unit block 102, when the entire image is always coded in the same method as in the second embodiment, a decrease in coding efficiency is possibly caused. In order to avoid this decrease, for example, on the coding device side, for the coding of the C1 and C2 components, there may be provided a configuration in which, in addition to the method described in the second embodiment, the coding is switched to the same processing as the coding of the C0 component. For this switching, for example, control may be performed so as to select optimal coding means between the coding according to the method described in the second embodiment and the same coding as that of the C0 component in terms of the rate/distortion measure based on the balance between the code quantity and the coding distortion. Alternatively, control may be performed so as to determine, according to a result of analysis of characteristics/activities of the signal of the coding unit block 102, which path for the coding processing is suited. When the switching is carried out, by multiplexing the switching control signal with the bit stream in a predetermined data unit, the decoding device side can decode and use the control signal without the determination processing for the switching control carried out by the coding device side, and hence the bit stream containing the switching control signal can be decoded by a simple configuration. The switching control signal may be multiplexed in a unit of coded data of the coding unit block 102, or there may be provided a configuration in which the switching control signal is multiplexed at an arbitrary level such as slice, picture, and sequence.

Third Embodiment

In a third embodiment, a description is given of a coding device for coding a video frame input in the 4:4:4 format in a unit of a rectangular region of M×M pixels for respective color components by using intra-frame and inter-frame adaptive predictions, and a corresponding decoding device. The coding device and the decoding device according to the third embodiment is characterized by including a mechanism for adaptively switching the sampling density of the image signal in the course of the coding and decoding.

1. Overview of Operation of Coding Device

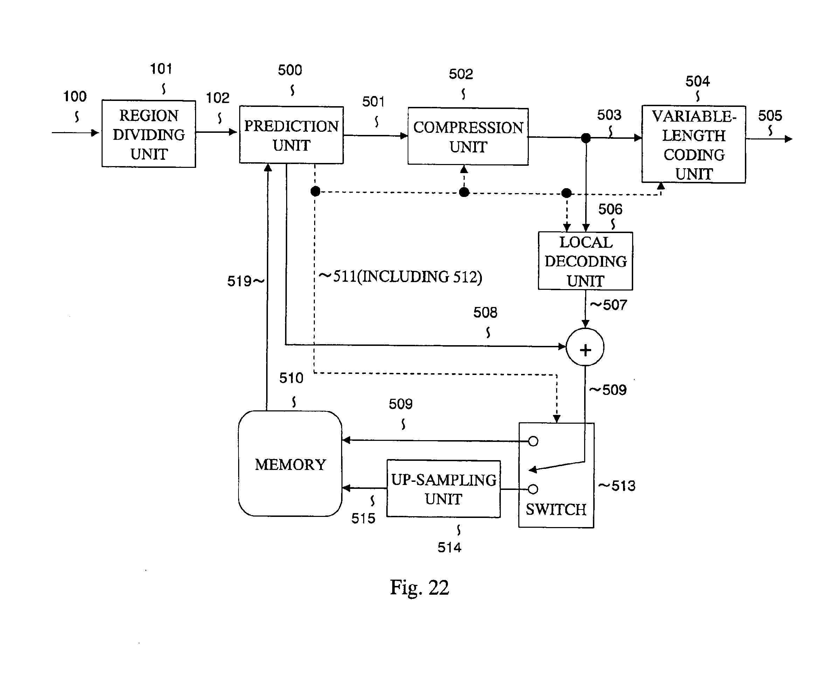

FIG. 22 illustrates a configuration of an image coding device according to the third embodiment.

A prediction unit 500 predicts samples of the respective color components in the coding unit block 102 within a frame and between frames, thereby obtaining prediction error signals 501. A compression unit 502 applies a transform such as the DCT (discrete cosine transform) to the prediction error signals 501, thereby removing signal correlations, and quantizes resulting signals into compressed data 503. The compressed data 503 coded through the entropy coding by a variable-length coding unit 504, is output as a bit stream 505, and is also sent to a local decoding unit 506, and decoded prediction error signals 507 are obtained. The decoded prediction error signals 507 are respectively added to predicted signals 508 used for generating the prediction error signals 501, thereby obtaining decoded signals 509. The decoded signals 509 are stored in a memory 510 in order to generate predicted signals 508 for the subsequent coding unit block 102. It should be noted that parameters for predicted signal generation 511 determined by the prediction unit 500 in order to obtain the predicted signals 508 are sent to the variable-length coding unit 504, and are output as the bit stream 505. The third embodiment provides a configuration in which the parameters for predicted signal generation 511 contain sampling density specification information 512 on the signals subject to the prediction, in addition to parameters such as the intra prediction mode indicating how the spatial prediction in a frame is carried out, and motion vectors indicating motion quantities between frames. A switch 513 is controlled based on this information 512. When the prediction is carried out in the original 4:4:4 format, the decoded signals 509 are directly written to the memory 510, and when the prediction is carried out at a sampling density lower than a sampling density of the 4:4:4 format, up-sampling is applied by an up-sampling unit 514 to the decoded signals 509 to obtain up-sampled decoded signals 515, and the up-sampled decoded signals 515 are then written to the memory 510. Moreover, the sampling density specification information 512 is also sent to the compression unit 502, the variable-length coding unit 504, and the local decoding unit 506, and is used to switch the number of samples to be transformed/quantized and the number of samples to be coded as the compressed data 504 through the variable-length coding.

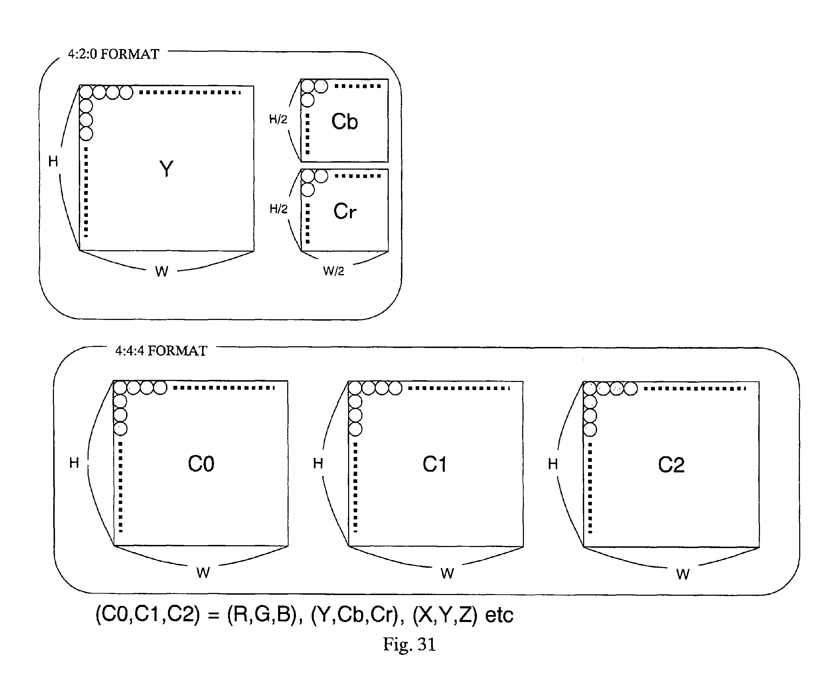

By configuring the coding device as described above, the following effects are provided. For the conventional 4:2:0 format illustrated in FIG 31, by making use of low visibility to a signal degradation of color information, the number of samples to be coded is reduced in an original signal region, thereby realizing information compression. This down-sampling of the color influences most on the image quality in a case in which, in a region where the color changes sharply, frequency components for expressing the change have been lost from the beginning. As the increase in definition of the display device and improvement in color reproducibility progress, the influence of the loss of the color information on the image quality becomes no longer negligible. On the other hand, in a region presenting a flat color distribution or a uniform color distribution, frequency components required for expressing such a sharp color change become less important, and hence there may be provided a configuration in which the number of samples of the color information to be coded is reduced in such a region. Because an image signal is not constant by nature and signal characteristics change locally, by providing a mechanism for adaptively changing the number of samples to be coded according to signal characteristics relating to the color reproduction as mentioned above, more efficient coding can be provided.

The following description of the third embodiment is given of a specific example in which the input signals 100 are signals in the 4:4:4 format in the YCbCr space. As the adaptive sampling, an example in which the adaptive sampling is applied to the color difference components Cb and Cr is described, and a specific example in which switching the prediction and coding of the Cb and Cr components between the 4:4:4 format and the 4:2:0 format is described.

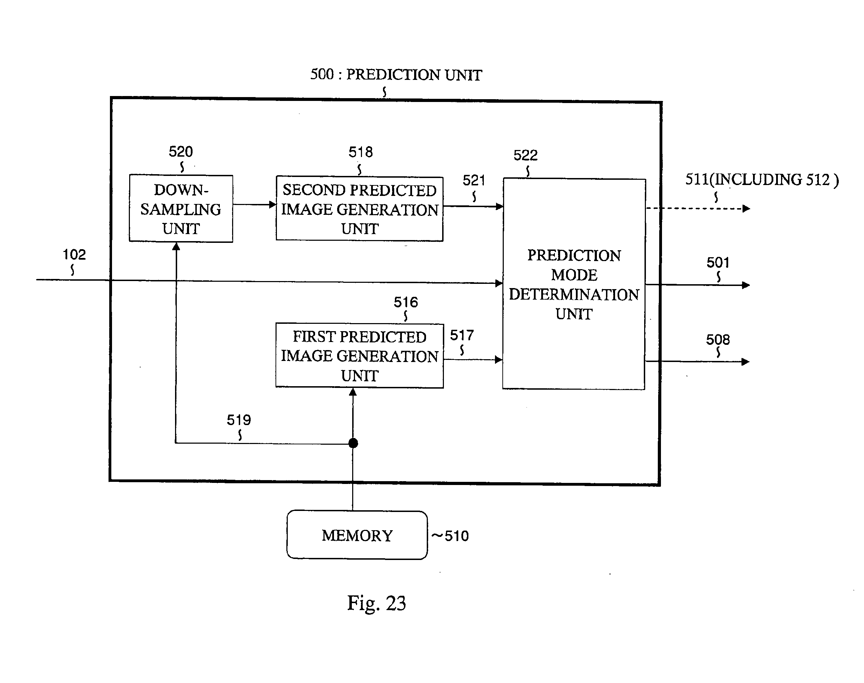

FIG. 23 illustrates an internal configuration of the prediction unit 500. First, predicted image candidates to be applied to the respective color components in the coding unit block 102 are generated. A first predicted image generation unit 516 uses a reference image 519 in the 4:4:4 format loaded from the memory 510, thereby generating a first predicted image candidate 517 to be used in the original 4:4:4 format. A second predicted image generation unit 518 uses a signal obtained by down-sampling the reference image 519 by the down-sampling unit 520 to the 4:2:0 format, thereby generating a second predicted image candidate 521 in the 4:2:0 format. The down-sampling unit 520 carries out processing of performing the down-sampling that halves the number of samples of the Cb and Cr components respectively in the horizontal and vertical directions. On this occasion, the first predicted image generation unit 516 and the second predicted image generation unit 518 generate predicted images by the application of the intra prediction within a frame and the motion compensation prediction between frames, and are configured to generally include all the prediction modes applicable to the respective color components of the coding unit block 102.

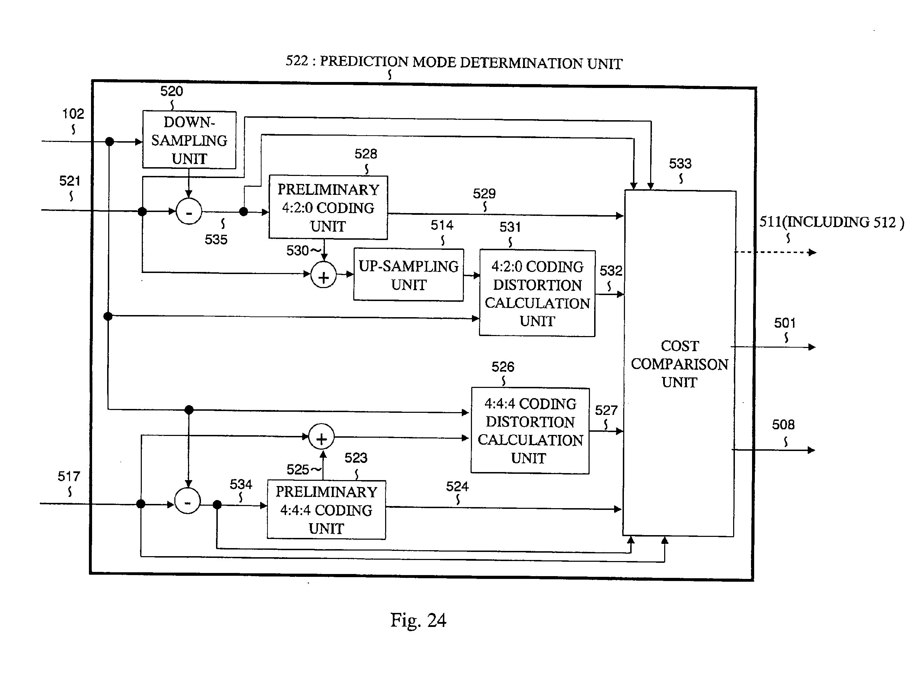

Then, the first predicted image candidate 517 and the second predicted image candidate 521 are compared in terms of coding efficiency, and a predicted image candidate having a higher efficiency is selected. This selection is carried out by a prediction mode determination unit 522. FIG. 24 illustrates an internal configuration of the prediction mode determination unit 522. By obtaining a difference of the first predicted image candidate 517 from the coding unit block 102, a first prediction error signal candidate 534 is obtained, and is once coded by a preliminary 4:4:4 coding unit 523. As a result, a first code quantity 524 (R1) and a first decoded prediction error signal 525 are obtained. After the first decoded prediction error signal 525 is added to the first predicted image candidate 517, a difference from the coding unit block 102 is obtained in a 4:4:4 coding distortion calculation unit 526, and, consequently, a first coding distortion 527 (D1) is obtained. On the other hand, the second predicted image candidate 521 is converted into the 4:2:0 format by the down-sampling unit 520, and a second prediction error signal candidate 535 is obtained by obtaining a difference of the second predicted image candidate 521 from the coding unit block 102, and is once coded by a preliminary 4:2:0 coding unit 528. As a result, a second code quantity 529 (R1) and a second decoded prediction error signal 530 are obtained. The second decoded prediction error signal 530 is added to the second predicted image candidate 521, and then is recovered to a signal in the 4:4:4 format by an up-sampling unit 514. A difference from the coding unit block 102 is obtained by a 4:2:0 coding distortion calculation unit 531, and, consequently, a second coding distortion 532 (D1) is obtained. A cost comparison unit 533 selects, between the following costs J1 and J2, a prediction mode smaller in cost as being efficient.

$$J1 = D1 + \lambda \times R1$$

$$J2 = D2 + \lambda \times R2$$

As a result, it is determined which is better between the prediction in the 4:2:0 format and the prediction in the 4:4:4 format, and a result thereof is output as sampling density specification information 512 contained in the parameters for predicted signal generation 511. Moreover, the final predicted signal 508 is selected based on the sampling density specification information 512 from the first predicted image candidate 517 and the second predicted image candidate 521, and is output. Similarly, the first prediction error signal candidate 534 or the second prediction error signal candidate 535 corresponding thereto is selected, and is output as the final prediction error signal 501.

It should be noted that, as another form of the processing by the prediction mode determination unit 522, there may be provided a configuration which does not carry out the preliminary coding, but obtains estimated quantities corresponding to D1/R1 and D2/R2 and makes a selection therebetween, which is not illustrated.

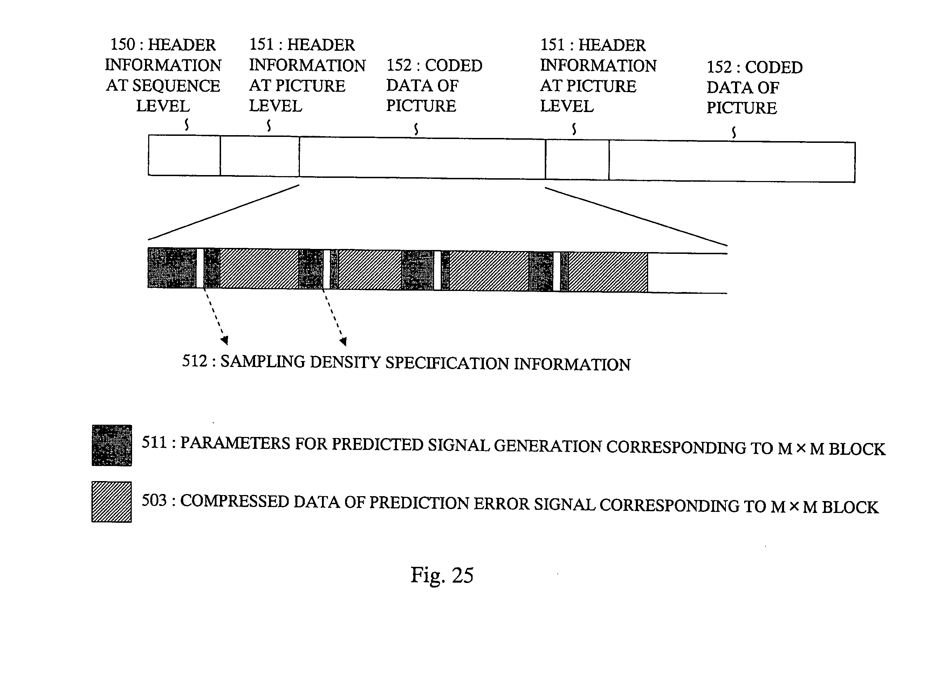

FIG 25 illustrates a structure of the bit stream. The bit stream is structured as a sequence of the header information at sequence level 150, the header information at video frame (picture) level 151, and the coded data of picture 152, and, for each coding unit block 102, the parameters for predicted signal generation 511 and the compressed data of prediction error signal 503 for the Y, Cb, and Cr components are multiplexed with the bit stream. The sampling density specification information 512 is multiplexed as a part of the parameters for predicted signal generation 511, and, according to this value, the quantities of the coded data of the Cb and Cr components change in the compressed data 503. When the prediction and coding are carried out in the 4:4:4 format, coded data corresponding to $M \times M$ samples is contained, and when the prediction and coding are carried out in the 4:2:0 format, coding data corresponding to $(M/2) \times (M/2)$ samples is contained. As described in the above-mentioned effects, when the $(M/2) \times (M/2)$ samples can sufficiently reproduce the frequency components of the color information contained in the original signal in the 4:4:4 format, the 4:4:4 format can be coded using a less code quantity.

2. Overview of Operation of Decoding Device

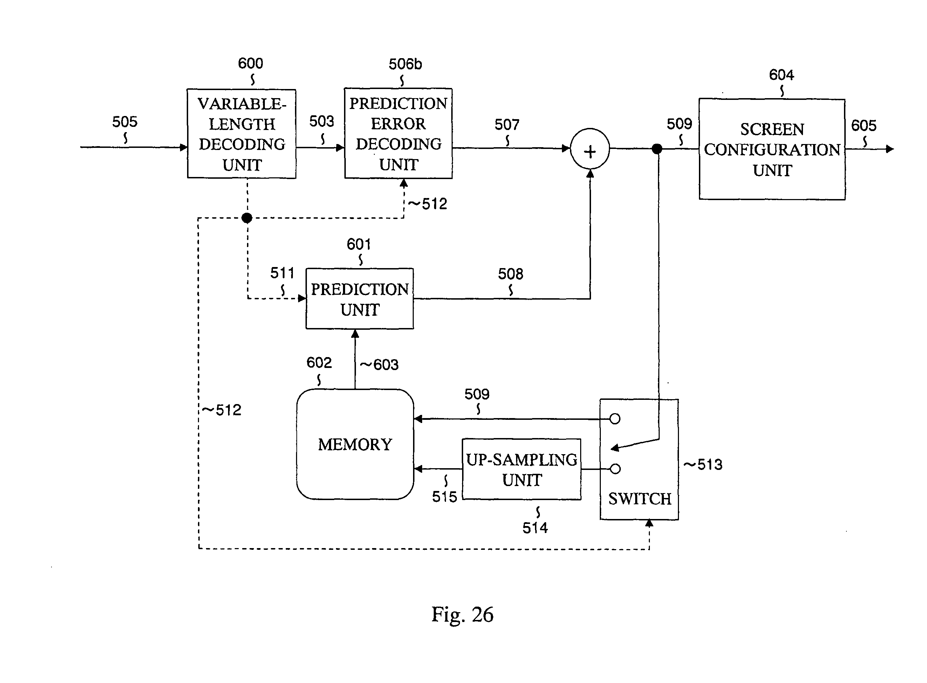

A decoding device of FIG 26 receives the bit stream 505 output by the coding device of FIG. 22, and carries out decoding processing for each $M \times M$ pixel block, thereby recovering each video frame. In FIG. 26, the variable-length coding unit 600 decodes, from the bit stream 505, upper-level header information such as the header information at sequence level 150 and the header information at picture level 151, and analyzes and extracts, from the coded data of picture 152, the parameters for predicted signal generation 511 and the compressed data 503 for each $M \times M$ pixel block.

The parameters for predicted signal generation 511 are passed to a prediction unit 601, and the compressed data 503 is passed to a prediction error decoding unit 506b (operating in the same way as the local decoding unit 506). The prediction unit 601 obtains temporal and spatial predicted signals 508 by using the parameters for predicted signal generation 511 such as motion vectors and the intra prediction mode, the sampling density specification information 512 contained as a part thereof, and reference images 603 stored in a memory 602. The prediction error decoding unit 506b applies inverse quantization to the compressed data 503, and then applies inverse transform processing such as the DCT (discrete cosine transform), thereby obtaining the decoded prediction error signals 507. By adding the predicted signals 508 and the decoded prediction error signals 507 to each other, the decoded signals 509 are obtained. The decoded signals 509 are stored in the memory 602 in order to generate the predicted signals 508 for the subsequent decoding processing. The sampling density specification information 512 contained in the parameters for predicted signal generation 511 is sent to the prediction error decoding unit 506b, is referred to for determination of the number of samples of the Cb and Cr components to be subjected to the inverse quantization and the inverse transform, and is also sent to the prediction unit 601 (described later) and the switch 513. The switch 513 is configured as follows. The switch 513 refers to the sampling density specification information 512. When the prediction is carried out in the original 4:4:4 format, the switch 513 writes the decoded signals 509 directly to the memory 602, and when the prediction is carried out in the 4:2:0 format, which is lower in sampling density than the 4:4:4 format, the switch 513 causes the up-sampling unit 514 to apply the up-sampling to the decoded signals 509 to obtain the up-sampled decoded signals 515, and writes the up-sampled decoded signals 515 to the memory 602. The decoded signals 509 corresponding to the $M \times M$ pixel block are arranged in a video frame by a screen configuration unit 604, resulting in a decoded video frame 605.

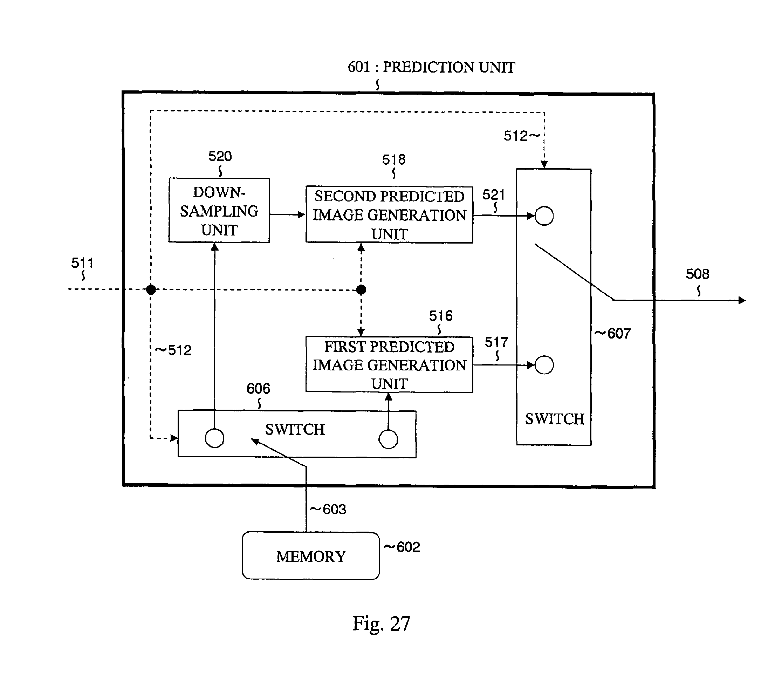

A description is now given of an internal operation of the prediction unit 601. FIG. 27 illustrates an internal configuration of the prediction unit 601. The prediction unit 601 generates, based on the parameters for predicted signal generation 511 decoded by the variable-length decoding unit 600, a predicted image used in a unit of the $M \times M$ pixel block formed of the respective Y, Cb, and Cr components. When the sampling density specification information 512 indicates that "the prediction is to be carried out in the original 4:4:4 format", a switch 606 is controlled to input the reference image 603 stored in the memory 602 to the first predicted image generation unit 516 side. The first predicted image generation unit 516 uses the parameters for predicted signal generation 511, thereby generating the first predicted image candidate 517 in the 4:4:4 format. When the sampling density specification information 512 indicates that "the prediction is to be carried out in the 4:2:0 format", the switch 606 is controlled to input the reference image 603 stored in the memory 602 to the down-sampling unit 520 side. As a result, the reference image 603 stored in the 4:4:4 format in the memory 602 is down-sampled to the 4:2:0 format, and the reference image 603 obtained as a result of the down-sampling is input to the second predicted image generation unit 518. The second predicted image generation unit 518 uses the parameters for predicted signal generation 511, thereby generating the second predicted image candidate 521 in the 4:2:0 format. The sampling density specification information 512 controls a switch 607, thereby determining the predicted signals 508 to be output. The number of samples remains the same for the Y signal in both the cases of the 4:4:4 format and the 4:2:0 format, and hence the predicted signal is always generated by the processing of the first predicted image generation unit 516.

By configuring the coding device and the decoding device as described above, a video signal in the 4:4:4 format defined in an arbitrary color space can be efficiently coded through the compression coding. The temporal and spatial prediction processing is configured to vary the sampling density for each component, and hence it is possible to select a mode having the highest coding efficiency for adapting to local signal characteristics of the image signal, and to carry out the coding in the selected mode.

According to the third embodiment, there is provided a configuration in which the sampling density specification information 512 is changed for each M×M pixel block for carrying out the coding control, but the specification of the sampling density specification information 512 may be changed according to various units of an image signal, such as the slice, picture, and sequence. For example, there is a possible case in which, across a sequence, the prediction and coding may always be carried out in the 4:2:0 format. In this case, there may be provided a configuration in which, when the decoded signal 509 of the Cb or Cr component is stored and recorded in the memory 602, the decoded signal is always stored in the 4:2:0 format. Moreover, in this case, across the sequence, the processing carried out by the up-sampling unit 514 before the storage in the memory 602 may be skipped. By multiplexing the sampling density specification information 512 with the header information at sequence level, the memory and the calculation quantity can be reduced on the decoding side in this way. Moreover, the 4:2:0 format is often used for the standard coding methods, and hence there may be provided a configuration in which the methods of the prediction and coding for the Cb and Cr components in the 4:2:0 format are designed compliant with the conventional standard coding methods. This configuration enables the decoding side to use processing circuits and implementation for decoding the Cb and Cr components which are used for the existing standard coding methods as processing circuits and implementation for the 4:2:0 format for decoding a bit stream coded in the 4:4:4 format, resulting in a decoding device high in interconnectivity at a low cost.

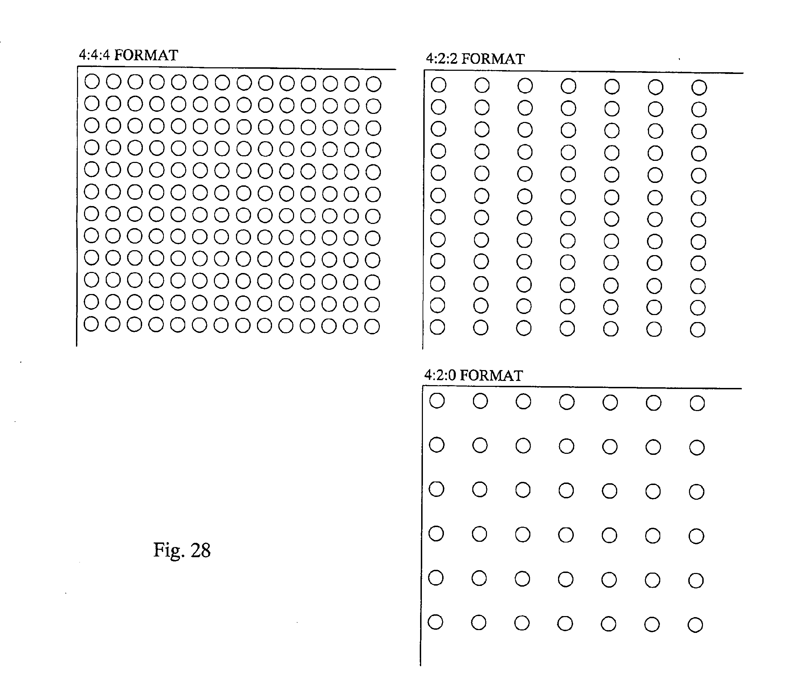

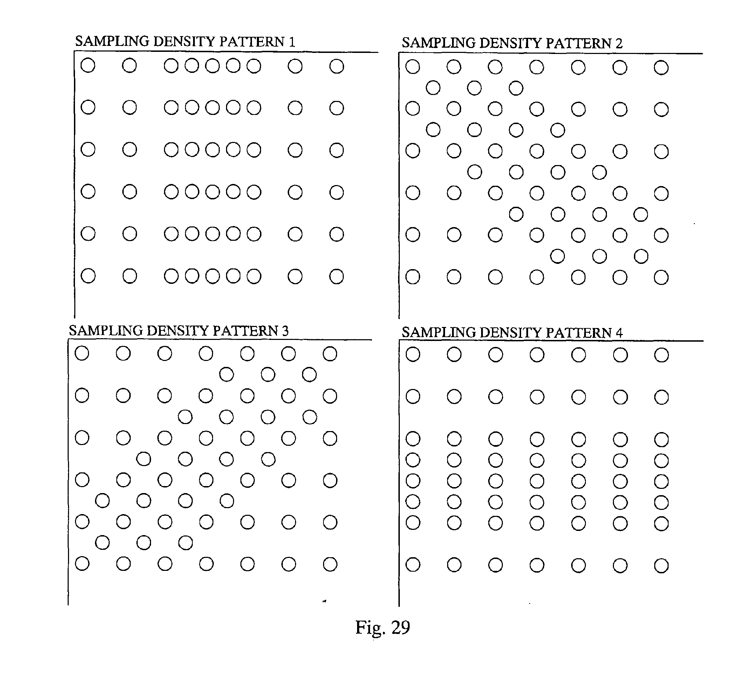

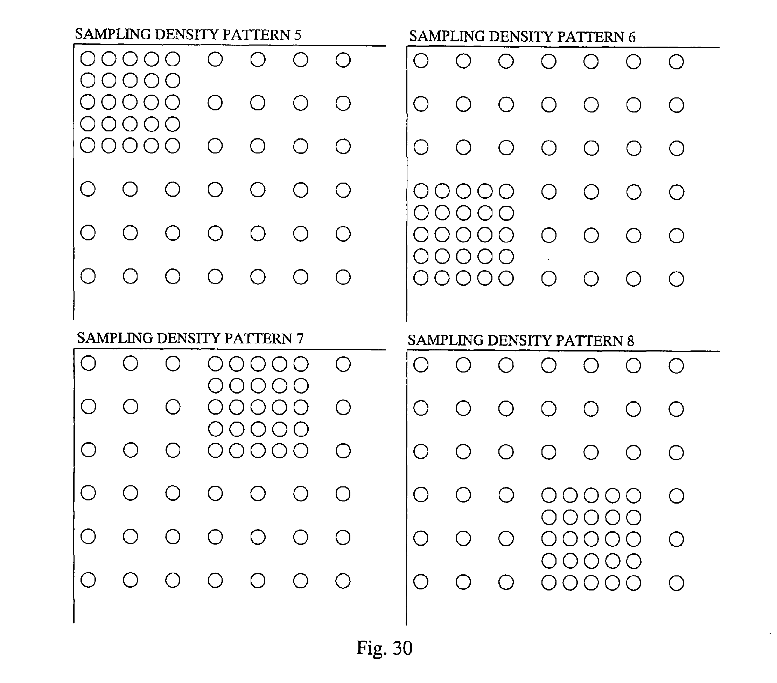

Moreover, the configuration according to the third embodiment may be extended so that the sampling density specification information 512 may be defined as information which can select, in addition to the 4:4:4 and 4:2:0 formats, various sampling patterns such as 4:2:2 (FIG. 28) and other variable sampling density patterns 1 to 8 (FIGS. 29 and 30). In an image signal, high frequency components may be spatially scattered in various directions. Thus, there may be a case in which, by dense sampling at locations presenting directional characteristics, even a small number of samples can sufficiently represent a signal. The 4:2:0 format simply reduces the samples, but the above-mentioned configuration for adaptively selecting among various sampling patterns enables selecting a sampling pattern suitable for local signal characteristics of an image signal, and thus efficient coding can be carried out. Moreover, though the third embodiment is described while the color space of signals to be coded/decoded is limited to the YCbCr space, the color space may be various spaces such as RGB and XYZ, and there may be provided a configuration in which, for selectively applying adaptive sub-sample coding/decoding to a specific color component, control of multiplexing a signal indicating presence/absence of the adaptive sub-sample coding with a bit stream is provided.

## Claims

1. An image coding device for receiving, as an input, a color image formed of a plurality of color components, performing compression coding in a unit of a first region obtained by dividing the color image, and generating a bit stream, comprising:

    a signal analysis unit for obtaining, for a signal of each of the plurality of color components belonging to the first region, an average in a unit of a second region obtained by dividing the first region, and obtaining an average separated signal corresponding to the second region;
    an average signal coding unit for applying, independently for the each of the plurality of color components, prediction coding to an average signal formed of the average obtained in the unit of the second region obtained by dividing the first region; and
    an average separated signal coding unit for transforming the average separated signals of the plurality of color components, which are obtained in the unit of the second region obtained by dividing the first region, by switching among a plurality of inter-color-component transform methods provided, and coding the transformed average separated signals independently of the average signal coding unit,
    wherein the average separated signal coding unit outputs information indicating selected inter-color-component transform methods to the bit stream as a part of coded data.

2. An image decoding device for receiving, as an input, a bit stream obtained by performing compression coding in a unit of a first region obtained by dividing a color image formed of a plurality of color components, and decoding the bit stream into an image signal, comprising:

an average signal decoding unit for decoding, from coded data for each of the plurality of color components belonging to the first region, an average coded in a unit of a second region obtained by dividing the first region;

an average separated signal decoding unit for decoding, from the coded data for the each of the plurality of color components belonging to the first region, an average separated signal coded in the unit of the second region obtained by dividing the first region; and

a signal composition unit for adding a decoded average signal decoded by the average signal decoding unit and the decoded average separated signal decoded by the average separated signal decoding unit to obtain a decoded signal, wherein:

the average signal decoding unit carries out the decoding by independently applying prediction processing to the each of plurality of the color components; and

the average separated signal decoding unit carries out the decoding by performing inter-color-component transform processing based on information that is extracted from the bit stream and indicates inter-color-component transform.

3. An image coding device for receiving, as an input, a color image formed of a plurality of color components, performing compression coding in a unit of a first region obtained by dividing the color image, and generating a bit stream, comprising:

a reference-color-component signal coding unit for coding a signal of a reference color component belonging to the first region; and

a signal coding unit for coding a signal of a color component other than the reference color component belonging to the first region, wherein the signal coding unit comprises:

a signal analysis unit for obtaining an average in a unit of a second region obtained by dividing the first region, and obtaining an average separated signal corresponding to the second region;

an average signal coding unit for applying, based on a prediction parameter output by the reference-color-component signal coding unit, independently for each of the plurality of color components, prediction coding to an average signal formed of the average obtained in the unit of the second region obtained by dividing the first region; and

an average separated signal coding unit for independently applying, based on a local decoded signal output by the reference-color-component signal coding unit, prediction coding to an average separated signal obtained in the unit of the second region obtained by dividing the first region.

4. An image decoding device for receiving, as an input, a bit stream obtained by performing compression coding in a unit of a first region obtained by dividing a color image formed of a plurality of color components, and decoding the bit stream into an image signal, comprising:

a reference-color-component signal decoding unit for decoding a signal of a reference color component belonging to the first region; and

a signal decoding unit for decoding a signal of a color component other than the reference color component belonging to the first region, wherein the signal decoding unit comprises:

an average signal decoding unit for decoding an average coded in a unit of a second region obtained by dividing the first region, by generating a predicted signal independently for each of the plurality of color components based on a prediction parameter output by the reference-color-component signal decoding unit;

an average separated signal decoding unit for decoding an average separated signal coded in the unit of the second region obtained by dividing the first region, by generating a predicted signal independently for the each of the plurality of color components based on a decoded signal output by the reference-color-component signal decoding unit; and

a signal composition unit for adding a decoded average signal decoded by the average signal decoding unit and the decoded average separated signal decoded by the average separated signal decoding unit to obtain a decoded signal.

5. An image coding device for receiving, as an input, a color image in a 4:4:4 format which is formed of a plurality of color components, performing compression coding in a unit of a first region obtained by dividing the color image, and generating a bit stream, comprising:

a first prediction unit for making prediction for a signal of a color component belonging to the first region based on a signal in the 4:4:4 format;

a second prediction unit for making prediction for a signal of a color component belonging to the first region based on a signal obtained by performing down-sampling from the 4:4:4 format;

a prediction method selection unit for selecting, between the prediction by the first prediction unit and the prediction by the second prediction unit, prediction presenting a higher efficiency, and causing the selected prediction unit to make signal prediction; and

a multiplexing unit for multiplexing information specifying the selected prediction method with the bit stream.

6. An image decoding device for receiving, as an input, a bit stream obtained by performing compression coding in a unit of a first region obtained by dividing a color image in a 4:4:4 format which is formed of a plurality of color components, and decoding the bit stream into an image signal, comprising:

a first predicted image generation unit for, upon decoding a signal of a color component belonging to the first region, generating a predicted image based on a signal in the 4:4:4 format;

a second predicted image generation unit for, upon decoding the signal of the color component belonging to the first region, generating a predicted image based on a signal obtained by performing down-sampling from the 4:4:4 format; and

a predicted image generation unit for extracting, from the bit stream, information specifying which of the first predicted image generation unit and the second predicted image generation unit is to be used to decode the signal of the color component belonging to the first region, and generating, based on the specified information, the predicted image.

7. An image coding method of receiving, as an input, a color image formed of a plurality of color components, performing compression coding in a unit of a first region obtained by dividing the color image, and generating a bit stream, comprising:

obtaining, for a signal of each of the plurality of color components belonging to the first region, an average in a unit of a second region obtained by dividing the first region, and an average separated signal corresponding to the second region;

applying, independently for the each of the plurality of color components, prediction coding to an average signal formed of the average obtained in the unit of the second region obtained by dividing the first region; and

transforming the average separated signals of the plurality of color components, which are obtained in the unit of the second region obtained by dividing the first region, by switching among a plurality of inter-color-component transform methods provided, and coding the transformed average separated signals independently of the prediction coding of the average signal,

wherein the coding of the average separated signals comprises outputting information indicating selected inter-color-component transform methods to the bit stream as a part of coded data.

8. An image decoding method of receiving, as an input, a bit stream obtained by performing compression coding in a unit of a first region obtained by dividing a color image formed of a plurality of color components, and decoding the bit stream into an image signal, comprising:

decoding, from coded data for each of the plurality of color components belonging to the first region, an average coded in a unit of a second region obtained by dividing the first region;

decoding, from the coded data for the each of the plurality of color components belonging to the first region, an average separated signal coded in the unit of the second region obtained by dividing the first region; and

adding a decoded average signal obtained by the decoding and the decoded average separated signal obtained by the decoding to obtain a decoded signal, wherein:

the decoding of the average signal comprises carrying out the decoding by independently applying prediction processing to the each of the plurality of color components; and

the decoding of the average separated signal comprises carrying out the decoding by performing inter-color-component transform processing based on information that is extracted from the bit stream and indicates inter-color-component transform.

9. An image coding method of receiving, as an input, a color image formed of a plurality of color components, performing compression coding in a unit of a first region obtained by dividing the color image, and generating a bit stream, comprising:

coding a signal of a reference color component belonging to the first region; and

coding a signal of a color component other than the reference color component belonging to the first region,

wherein the coding of the signal of the color component other than the reference color component comprises:

obtaining an average in a unit of a second region obtained by dividing the first region, and obtaining an average separated signal corresponding to the second region;

applying, based on a prediction parameter output in the coding of the signal of the reference color component, independently for each of the plurality of color components, prediction coding to an average signal formed of the average obtained in the unit of the second region obtained by dividing the first region; and

independently applying, based on a local decoded signal output in the coding of the signal of the reference color component, prediction coding to an average separated signal obtained in the unit of the second region obtained by dividing the first region.

**10.** An image decoding method of receiving, as an input, a bit stream obtained by performing compression coding in a unit of a first region obtained by dividing a color image formed of a plurality of color components, and decoding the bit stream into an image signal, comprising:

decoding a signal of a reference color component belonging to the first region; and

decoding a signal of a color component other than the reference color component belonging to the first region,

wherein the decoding of the signal of the color component other than the reference color component comprises:

decoding an average coded in a unit of a second region obtained by dividing the first region, by generating a predicted signal independently for each of the plurality of color components based on a prediction parameter output in the decoding of the signal of the reference color component;

decoding an average separated signal coded in the unit of the second region obtained by dividing the first region, by generating a predicted signal independently for the each of the plurality of color components based on a decoded signal output in the decoding of the signal of the reference color component; and

adding a decoded average signal obtained by the decoding and the decoded average separated signal obtained by the decoding to obtain a decoded signal.

**11.** An image coding method of receiving, as an input, a color image in a 4:4:4 format which is formed of a plurality of color components, performing compression coding in a unit of a first region obtained by dividing the color image, and generating a bit stream, comprising:

making prediction for a signal of a color component belonging to the first region based on a signal in the 4:4:4 format;

making prediction for a signal of a color component belonging to the first region based on a signal obtained by performing down-sampling from the 4:4:4 format;

selecting, between the prediction based on the signal in the 4:4:4 format and the prediction based on the signal obtained by performing the down-sampling from the 4:4:4 format, prediction presenting a higher efficiency, and performing signal prediction; and

multiplexing information specifying the selected prediction method with the bit stream.

**12.** An image decoding method of receiving, as an input, a bit stream obtained by performing compression coding in a unit of a first region obtained by dividing a color image in a 4:4:4 format which is formed of a plurality of color components, and decoding the bit stream into an image signal, comprising:

upon decoding a signal of a color component belonging to the first region, generating a predicted image based on a signal in the 4:4:4 format;

upon decoding the signal of the color component belonging to the first region, generating a predicted image based on a signal obtained by performing down-sampling from the 4:4:4 format; and

extracting, from the bit stream, information specifying which of the generating a predicted image based on a signal in the 4:4:4 format and the generating a predicted image based on a signal obtained by performing down-sampling from the 4:4:4 format is to be used to decode the signal of the color component belonging to the first region, and generating, based on the specified information, the predicted image.

Fig. 1

Fig. 2

102 : CODING UNIT BLOCK (Ci COMPONENT)  104 : AVERAGE

105 : AVERAGE SEPARATED SIGNAL

Fig. 3

EP 2 200 330 A1

Fig. 4

EP 2 200 330 A1

107 : SECOND SIGNAL CODING UNIT

Fig. 5

150 : HEADER
INFORMATION
AT SEQUENCE
LEVEL

151 : HEADER
INFORMATION
AT PICTURE
LEVEL

152 : CODED
DATA OF
PICTURE

151 : HEADER
INFORMATION
AT PICTURE
LEVEL

152 : CODED
DATA OF
PICTURE

(a)

(b)

(c)

DC IMAGE CODED DATA CORRESPONDING TO (M/N) × (M/N) BLOCK (BIT STREAM 108)

AC IMAGE CODED DATA CORRESPONDING TO M × M BLOCK (BIT STREAM 109)

Fig. 6

Fig. 7

205 : SIGNAL COMPOSITION UNIT

203

204

ADDING UNIT
209

CLIP PROCESSING UNIT
210

206

Fig. 8

206 : DECODED SIGNAL (Ci COMPONENT)          203 : DC DECODED SIGNAL

204 : AC DECODED SIGNAL

Fig. 9

EP 2 200 330 A1

201 : FIRST SIGNAL DECODING UNIT

Fig. 10

EP 2 200 330 A1

202 : SECOND SIGNAL DECODING UNIT

134

109 → VARIABLE-LENGTH DECODING UNIT (215) → 132 → DECODING UNIT (216) → 217 → SECOND INVERSE TRANSFORM UNIT (218) → 204

Fig. 11

Fig. 12

Fig. 13

EP 2 200 330 A1

300 : C0 COMPONENT CODING UNIT

Fig. 14

308 : AC SIGNAL GENERATION UNIT

306

SUB-BLOCK
DIVIDING
UNIT

112a

AVERAGE
CALCULATION
UNIT

113a

114a~

AVERAGE
SEPARATED
SIGNAL
GENERATION
UNIT

309

Fig. 15

EP 2 200 330 A1

310 : C1 COMPONENT CODING UNIT

Fig. 16

Fig. 17

Fig. 18

150 : HEADER
INFORMATION
AT SEQUENCE
LEVEL

151 : HEADER
INFORMATION
AT PICTURE
LEVEL

152 : CODED
DATA OF
PICTURE

151 : HEADER
INFORMATION
AT PICTURE
LEVEL

152 : CODED
DATA OF
PICTURE

CODED DATA OF C0 COMPONENT

DC CODED DATA OF C1 COMPONENT          DC CODED DATA OF C2 COMPONENT

AC CODED DATA OF C1 COMPONENT          AC CODED DATA OF C2 COMPONENT

Fig. 19

Fig. 20

Fig. 21

EP 2 200 330 A1

Fig. 22

Fig. 23

EP 2 200 330 A1

522 : PREDICTION MODE DETERMINATION UNIT

Fig. 24

EP 2 200 330 A1

42

EP 2 200 330 A1

150 : HEADER
INFORMATION
AT SEQUENCE
LEVEL

151 : HEADER
INFORMATION
AT PICTURE
LEVEL

152 : CODED
DATA OF
PICTURE

151 : HEADER
INFORMATION
AT PICTURE
LEVEL

152 : CODED
DATA OF
PICTURE

512 : SAMPLING DENSITY SPECIFICATION INFORMATION

511 : PARAMETERS FOR PREDICTED SIGNAL GENERATION CORRESPONDING TO M × M BLOCK

503 : COMPRESSED DATA OF PREDICTION ERROR SIGNAL CORRESPONDING TO M × M BLOCK

Fig. 25

Fig. 26

Fig. 27

601 : PREDICTION UNIT

508

~607

512~

SWITCH

521 SECOND PREDICTED IMAGE GENERATION UNIT

517 FIRST PREDICTED IMAGE GENERATION UNIT

518

516

520 DOWN-SAMPLING UNIT

606 SWITCH

~603

~512

511

~602 MEMORY

4:2:2 FORMAT

4:2:0 FORMAT

4:4:4 FORMAT

Fig. 28

SAMPLING DENSITY PATTERN 1

SAMPLING DENSITY PATTERN 2

SAMPLING DENSITY PATTERN 3

SAMPLING DENSITY PATTERN 4

Fig. 29

EP 2 200 330 A1

Fig. 30

4:2:0 FORMAT

Y

Cb

Cr

W

H

W/2

H/2

H/2

4:4:4 FORMAT

C0

C1

C2

W

W

W

H

H

H

(C0,C1,C2) = (R,G,B), (Y,Cb,Cr), (X,Y,Z) etc

Fig. 31

Fig. 32

## INTERNATIONAL SEARCH REPORT

| International application No. |
| --- |
| PCT/JP2008/067822 |

A.  CLASSIFICATION OF SUBJECT MATTER
*H04N11/04(2006.01)i, H04N7/32(2006.01)i*

According to International Patent Classification (IPC) or to both national classification and IPC

B.  FIELDS SEARCHED

Minimum documentation searched (classification system followed by classification symbols)
H04N11/04, H04N7/32

Documentation searched other than minimum documentation to the extent that such documents are included in the fields searched
| Jitsuyo Shinan Koho | 1922-1996 | Jitsuyo Shinan Toroku Koho | 1996-2009 |
| --- | --- | --- | --- |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>A | JP 2002-204455 A  (Hudson Co., Ltd.),<br>19 July, 2002 (19.07.02),<br>Par. Nos. [0061] to [0175]; Figs. 1 to 15<br>(Family: none) | 1,2,7,8<br>3,4,9,10 |
| X | JP 2003-47024 A  (Nikon Corp.),<br>14 February, 2003 (14.02.03),<br>Par. Nos. [0006] to [0078]; Figs. 1 to 14<br>& US 2003/0026477 A1   & US 2006/0140476 A1 | 5,6,11,12 |
| A | JP 2007-104117 A  (Seiko Epson Corp.),<br>19 April, 2007 (19.04.07),<br>Par. Nos. [0054] to [0068]; Figs. 7 to 9<br>(Family: none) | 3,4,9,10 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>22 January, 2009 (22.01.09) | Date of mailing of the international search report<br>03 February, 2009 (03.02.09) |
| --- | --- |
| Name and mailing address of the ISA/<br>Japanese Patent Office | Authorized officer |
| Facsimile No. | Telephone No. |

Form PCT/ISA/210 (second sheet) (April 2007)

<div align="center">

**INTERNATIONAL SEARCH REPORT**

</div>

| | International application No. |
|---|---|
| | PCT/JP2008/067822 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 11-243551 A  (Mitsubishi Electric Corp.),<br>07 September, 1999 (07.09.99),<br>Full text; all drawings<br>& US 2004/0202245 A1     & FR 2773295 A<br>& TW 398152 B            & CA 2256071 A<br>& CN 1226782 A           & CA 2256071 A1 | 1-4,7-10 |
| A | WO 2007/010690 A1  (Mitsubishi Electric Corp.),<br>25 January, 2007 (25.01.07),<br>Full text; all drawings<br>& US 2008/0123947 A1     & US 2008/0123977 A1<br>& US 2008/0130747 A1     & US 2008/0130988 A1<br>& US 2008/0130989 A1     & US 2008/0130990 A1<br>& US 2008/0137744 A1     & EP 1909508 A1<br>& CA 2610276 A | 5,6,11,12 |

Form PCT/ISA/210 (continuation of second sheet) (April 2007)

## INTERNATIONAL SEARCH REPORT

| International application No. |
| --- |
| PCT/JP2008/067822 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
See the extra sheet.

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2007)

| INTERNATIONAL SEARCH REPORT | International application No. |
|---|---|
|  | PCT/JP2008/067822 |

Continuation of Box No.III of continuation of first sheet(2)

I. The inventions of claims 1, 2, 7, 8 and the inventions of claims 3, 4, 9, 10 relate to an image coding device for coding a color image by using average values and average value separation signals.

II. The inventions of claims 5, 6, 11, 12 relate to an image coding device for performing signal prediction by selecting one with higher efficiency from a prediction based on a 4:4:4 format signal and a prediction based on the signals down-sampled from 4:4:4 format signals when coding a color image.

They are not a group of inventions so linking as to form a single general inventive concept.

The matter common to the inventions (I-1) of claims 1, 2, 7, 8 and the inventions (I-2) of claims 3, 4, 9, 10 is to code a color image by using average values and average value separation signals. Since the search has revealed that the common matter is disclosed in document JP 2002-204455 A (Hudson Co., Ltd.), 19 July 2002 (19.07.02), paragraphs [0061]-[0175], figures 1-15, it is obvious that the common matter does not make a contribution over the prior art.

Consequently since the common matter does not make a contribution over the prior art, it is not a special technical feature within the meaning of PCT Rule 13.2, second sentence.

Therefore, there is no matter common to all the inventions.

Since there is no other common matter considered as a special technical feature within the meaning of PCT Rule 13.3, second sentence, no technical relationship among these different inventions within the meaning of PCT Rule 13 can be seen.

Therefore, it is obvious that the inventions of claims 1-12 do not satisfy the requirement of unity of invention.

Form PCT/ISA/210 (extra sheet) (April 2007)